(19) Europäisches Patentamt / European Patent Office / Office européen des brevets

(11) **EP 3 539 744 A1**

(12) **EUROPÄISCHE PATENTANMELDUNG**


(43) Veröffentlichungstag:
**18.09.2019 Patentblatt 2019/38**

(51) Int Cl.:
***B29C 45/14*** *(2006.01)* *B29L 23/00* *(2006.01)*
*B29K 705/00* *(2006.01)*

(21) Anmeldenummer: **19155792.5**

(22) Anmeldetag: **06.02.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **14.03.2018 EP 18161710**



(71) Anmelder: **LANXESS Deutschland GmbH**
**50569 Köln (DE)**

(72) Erfinder: **KOCH, Boris**
**42929 Wermelskirchen (DE)**


(54) **HOHLPROFIL-VERBUNDTECHNOLOGIE**


(57) Die Erfindung betrifft ein Verfahren zur Herstellung eines Kunststoff-Metall Verbundbauteils aus wenigstens einem Hohlprofil und wenigstens einem, im Inneren des wenigstens einen Hohlprofils einzusetzenden Fluids.


**Fig.1**

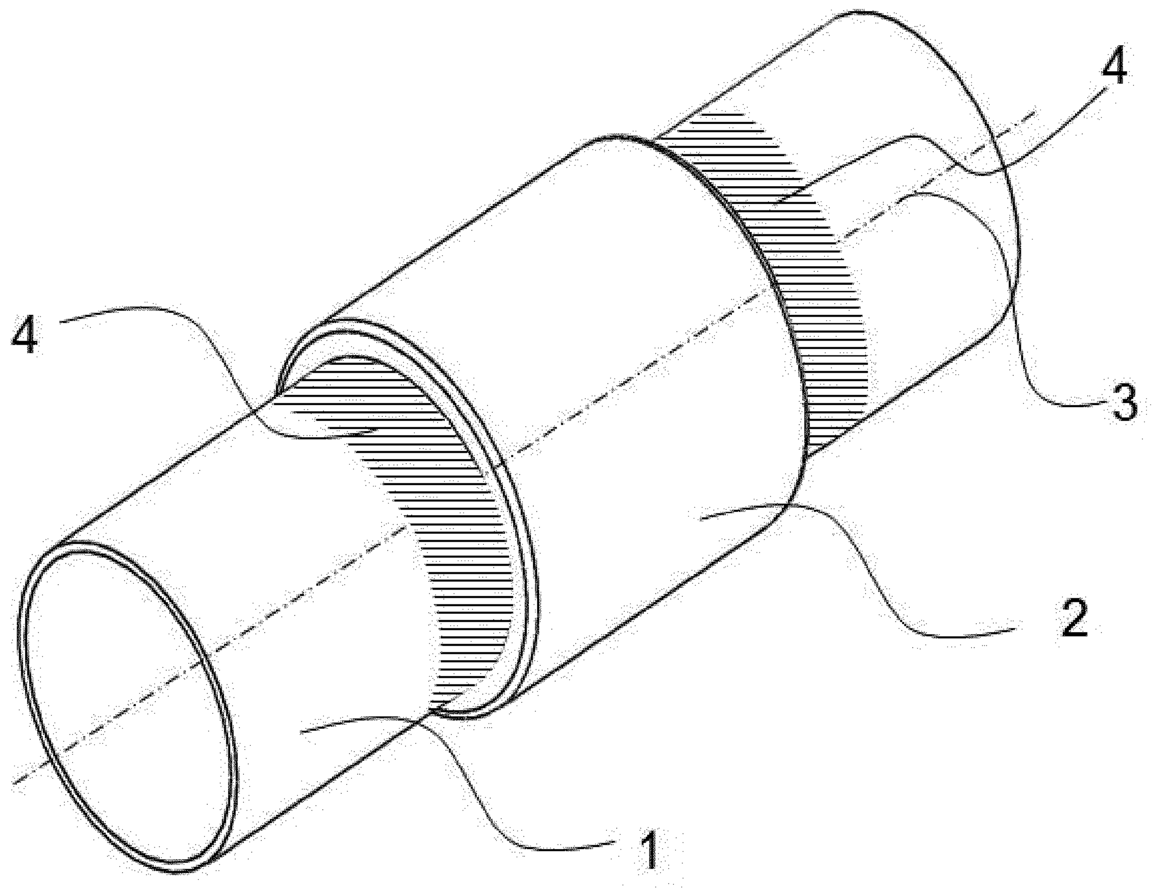


EP 3 539 744 A1

## Beschreibung

Die Erfindung betrifft ein Verfahren zur Herstellung eines Kunststoff-Metall Verbundbauteils aus wenigstens einem Hohlprofil und wenigstens einem, im Inneren des wenigstens einen Hohlprofils, einzusetzenden Fluids.

Vielfach werden Verbundbauteile bereits heute im Kraftfahrzeugbau eingesetzt. Zumeist werden sie aus einem metallischen Rohrprofil bzw. aus einem metallischen, geschlossenen Hohlprofil hergestellt, das mit wenigstens einem separat hergestellten Kunststoffelement verbunden wird. Das Herstellen zweier separater Bauteile, einem metallischen Rohr- bzw. Hohlprofil und einem Kunststoffelement, und schließlich das Verbinden dieser wenigstens zwei Bauteile führt zu erhöhtem Fertigungs- und Montageaufwand. Zum Verbinden eines Rohr- bzw. Hohlprofils mit einem oder mehreren Kunststoffelement(en) sind ferner zusätzliche Verbindungsmittel in Form von Schrauben, Muttern, Nieten o.ä. erforderlich, was in der Regel wiederum mehr Bauraum erfordert und zu höherem Gewicht des herzustellenden Verbundbauteils führt.

Vergleichbare, allein aus Kunststoff bestehende, Verbundbauteile - d. h. sowohl Hohlprofil als auch Kunststoffelement(e) sind aus Kunststoff - zeigen bei vertretbarer Dimensionierung der Querschnitte geringere Festigkeiten und Steifigkeiten, aber auch Nachteile in der Energieaufnahme bei schlagartiger Beanspruchung, verglichen mit gleichartigen Bauteilen aus metallischen Werkstoffen.

## Stand der Technik

WO 2009/077026 A1 betrifft ein Verfahren zur Herstellung eines Verbundbauteils aus einem Profil und einem Spritzgusselement, wobei das Spritzgusselement an das Profil angespritzt wird, so dass das Profil in Umfangsrichtung unverlierbar umgriffen wird und dabei am Profil zumindest ein Formschlusselement ausgebildet wird, das beim Anspritzen erfasst wird indem das zwischen den Enden des Profils liegende Formschlusselement in Umfangsrichtung und Längserstreckung begrenzt aus- oder eingeformt wird.

Nachteilig an dem Verfahren der WO 2009/077026 A1 ist die sehr aufwändige und kostenintensive mechanische Verbindung von spritzgegossener Kunststoffkomponente und dem Profil. Da gemäß WO 2009/077026 A1 in einem Kombinationswerkzeug vor dem Spritzgießverfahren ein Innenhochdruckumformverfahren (IHU) angewandt wird, ergibt sich zwangsläufig eine Limitierung des Verfahrens hinsichtlich der minimalen Dimension der Wanddicke des Profils, was einer Gewichtsreduktion im Sinne von modernem Leichtbau entgegen steht. Zudem ergibt sich eine Einschränkung im Hinblick auf die Schubsteifigkeit und Schubfestigkeit der Verbindung von spritzgegossener Komponente mit dem Profil. Da zudem die Verbindung beider Komponenten auf einem Formschluss beruht, lässt sich diese Verbindung nur durch ein Umspritzen des Profils in Form eines Ringes, in WO 2009/077026 A1 als Umfangslamelle bezeichnet, ausführen. Die Breite einer solchen Umfangslamelle ist jedoch begrenzt, da es sonst während des IHU zu ungewollt hohen Verformungen der Profilwandung bis hin zum Platzen derselben kommen kann. Eine Steigerung der Verbindungssteifigkeit bzw. Verbindungsfestigkeit von Profil und spritzgegossener Komponente kann deshalb in der WO 2009/077026 A1 nur durch eine Anordnung mehrerer solcher Umfangslamellen entlang des Profils erfolgen, wobei ein Mindestabstand von mehreren Millimetern zwischen den Umfangslamellen eingehalten werden muss. Dieser Abstand wird gemäß WO 2009/077026 A1 durch Kerne generiert. Ist jedoch die Breite dieser Kerne zu gering droht Kernbruch und das Platzen des Profils, da bei Anwendung des IHU die Rohrwandung des als Rohr eingesetzten Profils sowohl radial aufgeweitet, als auch axial auf der Gravur verschoben wird und das Profil dabei möglichst großflächig abgestützt werden muss. Gemäß WO 2009/077026 A1 lässt sich deshalb auf einer Profilfläche X = 100% im Mittel nur ein Anteil von maximal 50% mit Kunststoff überspritzen.

WO 2005/002825 A1 beschreibt ein Verfahren zur Herstellung eines Kunststoff-Metall-Verbundbauteils, wenigstens bestehend aus einem Hohlkörper aus Metall oder Kunststoff, welcher mindestens eine Öffnung aufweist und mit thermoplastischem Kunststoff angespritzt und/oder teilweise oder vollständig umspritzt wird, wobei beim Anspritzen und /oder Umspritzen der Hohlkörper mit einer inkompressiblen Flüssigkeit vollständig gefüllt ist. WO 2005/002825 A1 offenbart keine Lösung hinsichtlich der Handhabe der Toleranzproblematik eines erfindungsgemäß einzusetzenden Hohlprofils zur Herstellung erfindungsgemäßer Kunststoff-Metall Verbundbauteile. Ein mit Übermaß gefertigtes Hohlprofil gemäß WO 2005/002825 A1 würde sich nicht zwangfrei bzw. widerstandsfrei in eine Kavität eines erfindungsgemäß einzusetzenden Spritzgieß- oder Presswerkzeugs einlegen lassen und beim Schließen dieses Spritzgießoder Presswerkzeugs zu Schäden, entweder am Hohlprofil selbst oder am Spritzgieß- oder Presswerkzeug führen. Bei einem zu klein gefertigten Hohlprofil gemäß WO 2005/002825 A1 würde Kunststoffschmelze in nicht gewünschte Bereiche auf das Hohlprofil aufgetragen. Auf die Problematik der Fertigungstoleranzen des erfindungsgemäß einzusetzenden Hohlprofils wird somit in WO 2005/002825 A1 nicht eingegangen. Eine großserientaugliche Fertigung von Kunststoff-Metall Verbundbauteilen kann mit dem Verfahren gemäß WO 2005/002825 A1 nicht durchgeführt bzw. abgesichert werden.

EP 2604407 A1 beschreibt ein Spritzgießverfahren zur Herstellung einer Rohrverbindung, bestehend aus einer rohrförmigen thermoplastischen Komponente und wenigsten einem Funktionselement aus einem dazu kompatiblen thermoplastichen Material. Um ein Deformieren des thermoplastischen Rohres beim Anspritzen des Funktionselementes zu verhindern, werden unterschiedlichste Füllstoffe bzw. Füllelemente im Inneren des Rohres eingebracht, die nach dem Spritzgießprozess wieder entfernt werden. Auf die Problematik der Fertigungstoleranzen eines dabei einzusetzenden Hohlprofils wird in EP 2604407 A1 nicht eingegangen. Eine großserientaugliche Fertigung kann mit dem Verfahren gemäß EP 2604407 A1 nicht abgesichert werden.

Der vorliegenden Erfindung lag deshalb die Aufgabe zugrunde, ein Verfahren zur Herstellung von Kunststoff-Metall Verbundbauteilen bereitzustellen, bei dem ein dünnwandiges, metallbasiertes Hohlprofil mit ausreichend Spiel widerstandsfrei in ein Spritzgieß- bzw. Presswerkzeug eingebracht wird und dabei trotzdem eine Abdichtung eines in wenigstens einer Kavität für einen auf das Hohlprofil aufzutragenden Kunststoffauftrags sowie ggf. dessen Verteilung um das Hohlprofil herum erzielt wird, der aufzutragende bzw. der schließlich aufgetragene Kunststoffauftrag sich zudem mit der Außenseite des Hohlprofils verbindet, ohne dabei dessen gesamte Außenform zu verformen, wodurch eine radiale, als auch axiale, formschlüssige, mechanisch steifere und höher belastbare Verbundkomponente in Form eines Kunststoff-Metall Verbundbauteils entsteht, als dass es nach dem oben zitierten Stand der Technik hergestellt werden kann.

Zusätzlich bestand die zu lösende Aufgabe der vorliegenden Erfindung darin, toleranzbehaftete Hohlprofile unterschiedlichster Herkunft und unterschiedlichster Materialien in ein- und demselben Spritzgieß- oder Press-Prozess in definierten Bereichen mit Kunststoff-Funktionselemente(n) zu verbinden, wobei das Hohlprofil zwangfrei bzw. widerstandsfrei um 90° mit seiner Längsachse zur Schließrichtung gedreht in ein Spritzgieß- bzw. Presswerkzeug eingebracht wird und das Hohlprofil innerhalb des Werkzeugs eine zuverlässige radiale Abdichtung seiner Umfangsfläche an den axialen Enden der Spritzgieß- bzw. Presskavität erfährt, um Kunststoffauftrag in axialer Richtung in Bereichen zu verhindern, für die kein Kunststoffauftrag vorgesehen ist.

Erfindungsgemäß herzustellende Verbundbauteile sollen zudem keine Nachteile in der Fertigung, keine Nachteile in den Festigkeits- und Steifigkeitseigenschaften und auch keine Nachteile im Energieaufnahmeverhalten aufweisen, sowie ein hohes Maß an Funktionsintegration im Sinne der System- bzw. Modulbildung bei wirtschaftlicher Fertigung ermöglichen.

## Erfindung

Die Lösung der Aufgabe ist ein Verfahren zur Herstellung eines Kunststoff-Metall Verbundbauteils, insbesondere mit schubfester und formschlüssiger Verbindung der Metallkomponente und der Kunststoffkomponente, durch

a) Bereitstellen eines Spritzgieß- bzw. Presswerkzeugs mit wenigstens einer zu öffnenden Kavität und einem Werkzeugmaß A in Schließrichtung und einem Werkzeugmaß B rechtwinklig zur Schließrichtung des Werkzeugs und einem Kavitätsumfangsmaß UW, das dem Umfang der Kavität im Bereich der Werkzeugmaße A und B entspricht, mit wenigstens zwei Schiebern oder wenigstens zwei Kernzügen, in der Art angeordnet, dass die beiden offenen Enden des Hohlprofils durch die Fahrbewegung der wenigstens zwei Schieber oder wenigstens zwei Kernzüge verschlossen werden, oder die in Verfahrensschritt c) bereitzustellenden und in Verfahrensschritt d) in die offenen Enden einzubringenden Verschlusselemente gegen ein Herauspressen aus den offenen Enden des Hohlprofils durch den in Verfahrensschritt j) aufzutragenden Kunststoff blockiert werden,

b) Bereitstellen wenigstens eines Hohlprofils aus Metall mit einem Verhältnis von Durchmesser zu Wanddicke im Bereich von 5:1 bis 300:1, dessen Außenmaß C um einen Bereich von 0,1 bis 5% größer ist als das Werkzeugmaß A, und dessen Außenmaß D um einen Bereich von 0,1 bis 5% kleiner ist als das Werkzeugmaß B und die Angaben zu C und D sich auf 90° in Richtung zur Längsachse des Hohlprofils gesehen beziehen und dessen Hohlprofilumfangsmaß UH dem in a) genannten Kavitätsumfangsmaß UW der wenigstens einen Spritzgießwerkzeug- bzw. Presswerkzeugkavität entspricht,

c) Bereitstellen von wenigstens zwei Verschlusselementen,

d) Einbringen der in c) bereitgestellten Verschlusselemente und damit Abdichten der beiden offenen Enden des Hohlprofils,

e) Einbringen eines Fluids durch Öffnungen in das nach d) abgedichtete wenigstens eine Hohlprofil durch wenigstens eines der Verschlusselemente und Entlüften des Innenraums des Hohlprofils,

f) Einlegen des nach e) abgedichteten Hohlprofils in die wenigstens eine Kavität des in a) bereitgestellten Spritzgieß- bzw. Presswerkzeugs,

g) Abstützen der wenigstens zwei, die beiden Enden des Hohlprofils verschließenden Verschlusselemente durch die werkzeugseitigen Schieber oder Kernzüge,

h) Schließen der wenigstens einen Kavität des Spritzgieß- bzw. Presswerkzeugs sowie Verpressen des Hohlprofils mit der Werkzeugschließbewegung in Schließrichtung der wenigstens einen Kavität unter Formänderung des Hohlprofils indem die Außenfläche des Hohlprofils nach Beendigung des Werkzeugschließvorgangs der Innenform der Kavität des in Verfahrensschritt a) bereitgestellten Spritzgieß- bzw. Presswerkzeugs im Bereich der Kontaktflächen an den axialen Enden der wenigstens einen Kavität entspricht, wobei das Hohlprofilumfangsmaß UH gleich dem Kavitätsumfangsmaß UW bleibt,

i) Verriegeln der Schieber oder Kernzüge und damit gleichzeitiges Blockieren der in Verfahrensschritt c) bereitgestellten wenigstens zwei Verschlusselemente gegen ein Herauspressen durch den in Verfahrensschritt j) aufzutragenden Kunststoff aus den offenen Enden des Hohlprofils,

j) äußeres Auftragen eines Kunststoffauftrags in Form einer Schmelze bei einem Druck im Bereich von 1 bar bis 1000 bar auf das Hohlprofil, bevorzugt im Bereich von 10 bar bis 500bar, besonders bevorzugt im Bereich von 50 bar bis 300 bar,

k) Abkühlen des auf das Hohlprofil in i) aufgebrachten Kunststoffauftrags (Solidifikation),

l) Entnehmen des fertigen Verbundbauteils aus dem Spritzgieß- bzw. Presswerkzeug, und

m) Entfernen der Verschlusselemente und Entleeren des Fluids aus dem mit Kunststoffauftrag versehenen Hohlprofil.

Überraschender Weise erlaubt das erfindungsgemäße Verfahren durch die in den Verfahrensschritten a) und b) beschriebenen Werkzeugmaße A und B und der darauf abgestimmten und in Verfahrensschritt b) beschriebenen Hohlprofilmaße C und D ein Einlegen des Hohlprofils ins Spritzgieß- bzw. Presswerkzeug mit ausreichend Spiel und erzielt trotzdem mit der Vorgabe gleicher Kavitätsumfangsmaße UW und Hohlprofilumfangsmaße UH beim Schließen der wenigstens einen Kavität des Spritzgieß- bzw. Presswerkzeugs eine Abdichtung der wenigstens einen Kavität für einen auf das Hohlprofil aufzutragenden Kunststoffauftrag sowie ggf. dessen Verteilung um die Außenfläche des Hohlprofils herum im Verfahrensschritt j), wobei im Innenraum des Hohlprofils keine Volumenänderung stattfindet.

Ausreichend Spiel in Sinne der vorliegenden Erfindung bedeutet, dass das Kleinstmaß der Spritz- bzw. Presswerkzeugkavität, rechtwinklig zur Schließrichtung des Werkzeugs gesehen, größer, im Grenzfall auch gleich groß ist, wie das toleranzbehaftete Außenmaß des Hohlprofilquerschnitts, ebenfalls rechtwinklig zur Schließrichtung des Werkzeugs gesehen. Vorzugsweise verhält sich deshalb das Kleinstmaß der Spritzgieß- bzw. Presswerkzeugkavität im Bereich von 100 bis 105% zum Außenmaß des Hohlprofilquerschnitts, insbesondere 100%, jeweils senkrecht zur Schließrichtung des Werkzeugs gesehen.

Überraschender Weise funktioniert das mit ausreichend Spiel vorgesehene Einlegen des Hohlprofils ins Spritzgieß- bzw. Presswerkzeug und das Abdichten der wenigstens einen Kavität für einen auf das Hohlprofil aufzutragenden Kunststoffauftrag sowie ggf. dessen Verteilung auf der Außenfläche um das Hohlprofils herum auch wenn das Hohlprofilumfangsmaß UH gegenüber dem Kavitätsumfangsmaß UW des Spritzgieß- bzw. Presswerkzeugs um bis zu + 5% abweicht. In diesen Fall erfährt nämlich der Innenraum des Hohlprofils eine geringfügige Volumenreduzierung die dazu führt, dass die Verschlusselemente aus den offenen Enden des Hohlprofils durch das im Innenraum befindliche Fluid gegen den Widerstand der Schieber bzw. Kernzüge hinausgepresst werden. Da aber die Schieber bzw. die Kernzüge eine solche Bewegung während des Schließens des Spritzgieß- bzw. Presswerkzeugs zulassen und erst danach verriegeln, ist die Funktion gleichermaßen gegeben, als wenn das Hohlprofilumfangsmaß UH dem Kavitätsumfangsmaß UW des Spritzgieß- bzw. Presswerkzeugs entspricht.

Überraschenderweise erlaubt das erfindungsgemäße Verfahren deshalb die Herstellung von Kunststoff-Metall Verbundbauteilen aus einem Metall basierten Hohlprofil und einem dem Spritzdruck entgegenwirkenden Fluid im Inneren des dünnwandigen Hohlprofils mit einem äußerlich auf das Hohlprofil aufgebrachten Kunststoffauftrag in einem Spritzgieß- bzw. Presswerkzeug, ohne die Verwendung einer werkzeugtechnischen Operation oder die Verwendung eines zusätzlich anzuwendenden Innenhochdrucks gemäß dem Stand der Technik, um eine Abdichtung zwischen dem erfindungsgemäß einzusetzenden, toleranzbehafteten Hohlprofil und dem Spritzgieß- bzw. Presswerkzeug herzustellen, gleichfalls aber genügend Unterstützung derart bereitzustellen, dass der aufgebrachte Kunststoffauftrag formschlüssig, schubfest und schubsteif mit dem Hohlprofil verbunden wird, indem von einem Außenflächenabschnitt des Hohlprofils von X = 100%, mehr als 50%, vorzugsweise 75 bis 100%, besonders bevorzugt 90 bis 100%, mit Kunststoff verbunden werden, vorzugsweise durch Anspritzen, Umspritzen, Überspritzen, Anpressen oder Umpressen. Die Abdichtung zur wenigstens einen Kavität des Spritzgieß- bzw. Presswerkzeugs erfolgt erfindungsgemäß durch das Hohlprofil selber.

Erfindungsgemäß muss das Metall basierte Hohlprofil vor dem Kunststoffauftrag mit einem Fluid befüllt werden. Diese Maßnahme führt jedoch nicht zu einem Zusatzgewicht für das Kunststoff-Metall Verbundbauteil als Verfahrenserzeugnis, weil nach dem Kunststoffauftrag das Fluid wieder aus dem Hohlprofil wieder entfernt wird.

Erfindungsgemäß erzielt man überraschenderweise eine formschlüssige Verbindung in Form eines Hybridbauteils durch Umspritzen des Metall basierten Hohlprofils mit Kunststoff wobei eine Blockierung folgender Freiheitsgrade erfolgt:

- radial in alle Richtungen um die Mittelachse des Hohlprofils herum,

- rotatorisch rechtwinklig zur Mittelachse des Hohlprofils.

Für eine zusätzliche Blockierung rotatorisch um die Mittelachse herum und translatorisch in Richtung der Mittelachse des Hohlprofils bedarf es in einer weiteren bevorzugten oder alternativen Ausführungsform einer formschlüssigen oder adhäsiven Verbindung von Hohlprofil und Kunststoffauftrag durch eine Oberflächenbehandlung der äußeren Oberfläche des Hohlprofils. Eine solche Oberflächenbehandlung erfolgt vorzugsweise wenigstens vor Verfahrensschritt c). Als Folge dessen erzielt man eine Blockierung aller Freiheitsgrade, translatorisch in X-, Y- und Z-Richtung und rotatorisch um die X-, Y- und Z-Achse. Bevorzugte Formen der Oberflächenbehandlung sind der Auftrag wenigstens eines Haftvermittlers, eine Plasma-Oberflächenaktivierung, eine Laserstrukturierung, eine chemische Vorbehandlung oder ein additives Auftrageverfahren.

Bevorzugte chemische Vorbehandlungsmittel sind der Einsatz von Säuren oder Basen. Bevorzugtes additives Auftrageverfahren ist das thermische Metallaufspritzverfahren. Siehe: **https://de.wikipedia.org/wiki/Thermisches_Spritzen.**

In einer weiteren bevorzugten oder alternativen Ausführungsform weist das in Verfahrensschritt b) bereitzustellende Hohlprofil auf seiner Außenseite Strukturelemente, vorzugsweise Rippen, auf, die nach dem Kunststoffauftrag in Verfahrensschritt j) und dem Abkühlen in Verfahrensschritt k) eine formschlüssige Verbindung/Verzahnung mit der Blockierung aller Freiheitsgrade, translatorisch in X-, Y- und Z-Richtung und rotatorisch um die X-, Y- und Z-Achse und somit zusätzlich eine schubfeste und schubsteife Verbindung wenigstens in axialer, vorzugsweise in axialer und radialer Richtung, bezogen auf das Hohlprofil, bilden.

Zur Klarstellung sei angemerkt, dass alle aufgeführten, allgemeinen oder in Vorzugsbereichen genannten Definitionen und Parameter in beliebigen Kombinationen umfasst sind. Im Rahmen dieser Anmeldung zitierte Normen gelten in der zum Anmeldetag gültigen Fassung.

Verpressen gemäß des Verfahrensschritts h) bedeutet ein Verformen des Hohlprofils bei dem keine Umfangserweiterung des Hohlprofilumfangsmaßes UH, sondern nur eine Formänderung herbeigeführt wird. Bei einem toleranzbedingten Übermaß des Hohlprofilumfangs wird vorzugsweise eine Formänderung herbeigeführt, verbunden mit einer geringfügigen Stauchung bzw. Umfangsreduzierung des Hohlprofilumfangsmaßes UH gegen Ende der Werkzeugschließbewegung.

Die Schubfestigkeit ist eine Stoffkonstante, die den Widerstand eines Werkstoffs gegen Abscherung beschreibt, also gegen eine Trennung durch Kräfte, die zwei einander anliegende Flächen längs zu verschieben suchen. Die Schubfestigkeit wird bestimmt durch den Schubmodul, auch Gleitmodul genannt. Schubfest miteinander verbunden bedeutet im Sinne der vorliegenden Erfindung eine in axialer Richtung, vorzugsweise in axialer und radialer Richtung, des Hohlprofils schubsteife, formschlüssige Verbindung des Hohlprofils mit wenigstens einem auf das Hohlprofil aufgebrachten Kunststoffauftrag.

Die Schubsteifigkeit ist das Produkt aus dem Schubmodul G eines Werkstoffs und der Querschnittsfläche ***A***. Es gilt:

$$\textbf{Schubsteifigkeit} = G \cdot A \cdot \kappa \; (= G \cdot A_s)$$

Der querschnittsabhängige Korrekturfaktor $\kappa$ berücksichtigt dabei die über den Querschnitt ungleichförmige Verteilung der Schubspannung $\tau$. Oft wird die Schubsteifigkeit auch mithilfe der Schubfläche $\boldsymbol{A}_S$ ausgedrückt. Siehe: **https://de.wikipedia.org/wiki/Steifigkeit.**

Formschlüssige Verbindungen im Sinne der vorliegenden Erfindung entstehen durch das Ineinandergreifen von mindestens zwei Verbindungspartnern, die eine nichtlösbare Verbindung miteinander eingehen und sich nur durch Zerstören voneinander wieder trennen. Siehe: **https://de.wikipedia.org/wiki/Verbindungstechnik.**

**Bevorzugte Ausführungsformen der Erfindung**

In einer alternativen oder bevorzugten Ausführungsform erfolgt das Befüllen des Hohlprofils mit dem Fluid und/oder das Entleeren des Fluids aus dem Hohlprofil vor dem Verfahrensschritt j) im Spritzgieß- bzw. Presswerkzeug.

In einer alternativen oder bevorzugten Ausführungsform werden die Verfahrensschritte d) und e) innerhalb des Spritzgieß- bzw. Presswerkzeugs durchgeführt. In diesem Fall sind die Verschlusselemente Bestandteil des Spritzgieß- bzw. Presswerkzeugs in Form von Schiebern oder Kernzügen, die in diesem Fall das in Verfahrensschritt f) noch beidseitig offene Hohlprofil abdichten.

Vorzugsweise erfolgt das Einbringen eines Fluids bis dass 100% des Volumens des Innenraums des Hohlprofils mit demselben gefüllt sind.

Vorzugsweise weist ein erfindungsgemäß einzusetzendes Hohlprofil, abgesehen von den durch Verschlusselemente zu verschließenden Öffnungen an den Kopfenden, keine weiteren Öffnungen in Form von Bohrungen oder Löchern auf, um die Dichtigkeit für das Fluid zu gewährleisten.

In einer weiteren bevorzugten oder alternativen Ausführungsform wird nach dem Verfahrensschritt l) das Hohlprofil an wenigstens einer Position durch das Einwirken zusätzlicher Biegekräfte an Positionen, an denen sich kein Kunststoffauftrag befindet, verformt. Vorzugsweise lässt man zusätzliche Biegekräfte einwirken, wenn die endgültige Verbundbauteilform von der Form eines in Verfahrensschritt b) bereitzustellenden Hohlprofils, vorzugsweise in gerader Rohrform, abweicht.

In einer weiteren bevorzugten oder alternativen Ausführungsform wird vor dem Verfahrensschritt d) das Hohlprofil an wenigstens einer Position durch das Einwirken zusätzlicher Biegekräfte verformt. Diese Verformung lässt sich außerhalb des Spritzgieß- bzw. Presswerkzeugs an jeder beliebigen Position des Hohlprofils durchführen. Vorzugsweise lässt man auch hier zusätzliche Biegekräfte einwirken, wenn die endgültige Verbundbauteilform von der eines geraden Hohlprofils abweicht.

Vorzugsweise betrifft die Erfindung ein Verfahren zur Herstellung eines Kunststoff-Metall Verbundbauteils, insbesondere mit schubfester und formschlüssiger Verbindung der Metallkomponente und der Kunststoffkomponente, durch

a) Bereitstellen eines Spritzgieß- bzw. Presswerkzeugs **5** mit wenigstens einer zu öffnenden Kavität und einem 7 Werkzeugmaß A in Schließrichtung und einem **8** Werkzeugmaß B rechtwinklig zur Schließrichtung des Werkzeugs und einem **9** Kavitätsumfangsmaß UW, das dem Umfang der Kavität im Bereich der Werkzeugmaße A und B entspricht, mit wenigstens zwei Schiebern oder wenigstens zwei Kernzügen **23,** in der Art angeordnet, dass die beiden offenen Enden des Hohlprofils durch die Fahrbewegung der wenigstens zwei Schieber oder wenigstens zwei Kernzüge verschlossen werden, oder die in Verfahrensschritt c) bereitzustellenden und in Verfahrensschritt d) in die offenen Enden einzubringenden Verschlusselemente **18** gegen ein Herauspressen aus den offenen Enden des Hohlprofils durch den in Verfahrensschritt j) aufzutragenden Kunststoff 2 blockiert werden,

b) Bereitstellen wenigstens eines Hohlprofils **1** aus Metall mit einem Verhältnis von Durchmesser zu Wanddicke im Bereich von 5:1 bis 300:1, dessen **10** Außenmaß C um einen Bereich von 0,1 bis 5% größer ist als das **7** Werkzeugmaß A, und dessen **11** Außenmaß D um einen Bereich von 0,1 bis 5% kleiner ist als das **8** Werkzeugmaß B und die Angaben zu C und D sich auf 90° in Richtung zur Längsachse **3** des Hohlprofils **1** gesehen beziehen und dessen **12** Hohlprofilumfangsmaß UH dem in a) genannten **9** Kavitätsumfangsmaß UW der wenigstens einen Spritzgießwerkzeug- bzw. Presswerkzeugkavität entspricht,

c) Bereitstellen von wenigstens zwei Verschlusselementen **18,**

d) Einbringen der in c) bereitgestellten Verschlusselemente **18** und damit Abdichten der beiden offenen Enden des Hohlprofils **1,**

e) Einbringen eines Fluids durch Öffnungen **22** in das nach d) abgedichtete wenigstens eine Hohlprofil **1** durch wenigstens eines der Verschlusselemente **18** und Entlüften des Innenraums des Hohlprofils **1,**

f) Einlegen des nach e) abgedichteten Hohlprofils **1** in die wenigstens eine Kavität des in a) bereitgestellten Spritzgieß- bzw. Presswerkzeugs **5,**

g) Abstützen der wenigstens zwei, die beiden Enden des Hohlprofils **1** verschließenden Verschlusselemente **18** durch die werkzeugseitigen Schieber oder Kernzüge **23,**

h) Schließen der wenigstens einen Kavität **24** des Spritzgieß- bzw. Presswerkzeugs **5** sowie Verpressen des Hohlprofils **1** mit der Werkzeugschließbewegung in Schließrichtung **6** der wenigstens einen Kavität **24** unter Formänderung des Hohlprofils indem die Außenfläche des Hohlprofils **1** nach Beendigung des Werkzeugschließvorgangs der Innenform der Kavität des in Verfahrensschritt a) bereitgestellten Spritzgieß- bzw. Presswerkzeugs **5** im Bereich der Kontaktflächen **4** an den axialen Enden der wenigstens einen Kavität entspricht, wobei das **12** Hohlprofilumfangsmaß UH gleich dem **9** Kavitätsumfangsmaß UW bleibt,

i) Verriegeln der Schieber oder Kernzüge **23** und damit gleichzeitiges Blockieren der in Verfahrensschritt c) bereitgestellten wenigstens zwei Verschlusselemente **18** gegen ein Herauspressen durch den in Verfahrensschritt j) aufzutragenden Kunststoff **2** aus den offenen Enden des Hohlprofils **1,**

j) äußeres Auftragen eines Kunststoffauftrags **2** in Form einer Schmelze bei einem Druck im Bereich von 1 bar bis 1000 bar auf das Hohlprofil **1,** bevorzugt im Bereich von 10 bar bis 500bar, besonders bevorzugt im Bereich von 50 bar bis 300 bar,

k) Abkühlen des auf das Hohlprofil **1** in i) aufgebrachten Kunststoffauftrags **2** (Solidifikation),

l) Entnehmen des fertigen Verbundbauteils aus dem Spritzgieß- bzw. Presswerkzeug **5,** und

m) Entfernen der Verschlusselemente **18** und Entleeren des Fluids aus dem mit Kunststoffauftrag versehenen Hohlprofil **1.**

**Verfahrensschritt a)**

Verfahrensschritt a) betrifft das Bereitstellen eines Spritzgieß- bzw. Presswerkzeugs mit wenigstens einer zu öffnenden Kavität und einem Werkzeugmaß A in Schließrichtung und einem Werkzeugmaß B rechtwinklig zur Schließrichtung des Werkzeugs. Die Schließrichtung bezieht sich erfindungsgemäß auf das einzusetzende Spritzgieß- bzw. Presswerkzeug. Vorzugsweise weist ein erfindungsgemäß einzusetzendes Spritzgieß- bzw. Presswerkzeug zwei Werkzeughälften auf. Je nach Ausgestaltung des zu fertigenden Verbundbauteils können aber die Werkzeughälften wiederum aus mehreren Segmenten bestehen. Der Fachmann wird die Auslegung des einzusetzenden Spritzgieß- bzw. Presswerkzeugs entsprechend dem zu fertigenden Verbundbauteil anpassen. Eine Zusammenfassung erfindungsgemäß einzusetzender Spritzgieß- bzw. Presswerkzeuge sowie zu Herstellern derselben findet sich u.a. in W. Michaeli, G. Menges, P. Mohren, Anleitung zum Bau von Spritzgießwerkzeugen, 5. völlig überarbeitete Auflage, Carl Hanser Verlag München Wien 1999 (englische Ausgabe 2001**).**

Vorzugsweise weist ein erfindungsgemäß einzusetzendes Spritzgieß- bzw. Presswerkzeug folgende Merkmale auf, damit sich ein erfindungsgemäß einzusetzendes Hohlprofil mit all seinen Maß- und Formtoleranzen ohne Zwang in das Spritzgieß- bzw. Presswerkzeug einlegen lässt:

**aI.** Das Spritzgieß- bzw. Presswerkzeug muss so beschaffen sein, dass es die Spritzgieß- bzw. Presskavitäten zu den Bereichen des Hohlprofils, in denen in Verfahrensschritt e) kein Auftrag von Kunststoff erfolgen wird, beim Schließen des Werkzeugs abdichtet. Dazu sind im Spritzgieß- bzw. Presswerkzeug an den axialen Enden der Spritzgieß- bzw. Presskavitäten Kontaktflächen im Werkzeug notwendig, die das Hohlprofil während des Schließens des Werkzeugs von dessen Hohlprofilaußenmaß C auf das Werkzeugmaß A verpressen, wodurch sich gleichzeitig das Hohlprofilaußenmaß D auf das Werkzeugmaß B ändert und wobei das Hohlprofilumfangsmaß UH gleich dem Kavitätsumfangsmaß UW der wenigstens einen Spritzgieß- bzw. Presswerkzeugkavität bleibt,

**aII.** In einer Ausführungsform sind die Kontaktflächen der wenigstens zwei Werkzeughälften zum Hohlprofil im Spritzgieß- bzw. Presswerkzeug so ausgeführt, dass ein um bis zu +5% größeres Hohlprofilumfangsmaß UH über die in **aI.** beschriebene Verpressung hinaus auf das gleiche in **aI.** beschriebene Kavitätsumfangsmaß UW der wenigstens einen Spritzgießwerkzeug- oder Presswerkzeugkavität zusätzlich verpresst wird;

**aIII.** Die in **aI.** und **aII.** genannten Kontaktflächen der wenigstens zwei Werkzeughälften im Spritzgieß- bzw. Presswerkzeug umfassen das Hohlprofil bei geschlossenem Werkzeug in seinem gesamten Umfang und weisen vorzugsweise eine Breite, d. h. eine Ausdehnung in axialer Richtung des Hohlprofils gesehen, im Bereich von 1,0 bis 50,0 mm auf, bevorzugt 3,0 bis 25,0mm, besonders bevorzugt 5,0 bis 10,0mm;

**aIV.** In einer Ausführungsform sind die Kontaktflächen der wenigstens zwei Werkzeughälften zum Hohlprofil im Spritzgieß- bzw. Presswerkzeug so ausgeführt, dass diese Bereiche im Werkzeug durch gehärtete Einsätze dargestellt werden. Vorzugsweise weisen die gehärteten Einsätze eine Härte nach Rockwell im Bereich von 50 bis 62 HRC auf. Damit liegt die Härte im Bereich üblicher Biege- und Stanzwerkzeuge. Siehe: **https://de.wikipedia.org/wiki/Rockwell_(Einheit);**

**aV.** Das Spritzgieß- bzw. Presswerkzeug muss zwischen seinen Kontaktflächen außerhalb der Spritzgieß- bzw. Presskavitäten einen Freiraum um das Hohlprofil herum bieten. Vorzugsweise beträgt bzw. liegt dieser Freiraum im Bereich von 1,0 bis 10,0mm.

Das Spritzgieß- bzw. Presswerkzeug muss zudem so beschaffen sein, dass es mit wenigstens zwei Schiebern oder wenigstens zwei Kernzügen versehen ist. Diese Schieber oder Kernzüge sind in der Art angeordnet sind, dass die beiden offenen Enden des eingelegten Hohlprofils durch die Fahrbewegung dieser wenigstens zwei Schieber oder wenigstens zwei Kernzüge verschlossen werden können, oder die in Verfahrensschritt c) bereitgestellten und in Verfahrensschritt d) in die offenen Enden eingebrachten Verschlusselemente gegen ein Herauspressen aus den offenen Enden des Hohlprofils durch den in Verfahrensschritt i) aufzutragenden Kunststoffauftrag blockiert werden können.

Wenigstens einer der zwei Schieber oder Kernzüge muss so beschaffen sein, dass er eine Öffnung aufweist, durch die der verschlossene Innenraum des Hohlprofils mit einem Fluid gefüllt, entlüftet und entleert werden kann.

Die wenigstens zwei Schieber oder Kernzüge müssen so beschaffen sein, dass sie die beiden offenen Enden des Hohlprofils zuverlässig abdichten.

In einer Ausführungsform sind die wenigstens zwei Schieber oder Kernzüge so beschaffen, dass diese im Spritzgieß- bzw. Presswerkzeug durch gehärtete Einsätze dargestellt werden. Vorzugsweise weisen diese gehärteten Einsätze eine Härte nach Rockwell im Bereich von 50 bis 62 HRC auf.

**Verfahrensschritt b)**

Im Verfahrensschritt b) wird wenigstens ein Hohlprofil mit einem Verhältnis von Durchmesser zu Wanddicke im Bereich von 5:1 bis 300:1, vorzugsweise im Bereich von 10:1 bis 200:1, besonders bevorzugt im Bereich von 10:1 bis 100:1, bereitgestellt, dessen Hohlprofilaußenmaß C um einen Bereich von 0,1 bis 5% größer ist, als das Werkzeugmaß A der Spritzgieß- bzw. Presswerkzeugkavität und dessen Hohlprofilaußenmaß D um einen Bereich von 0,1 bis 5% kleiner ist, als das Werkzeugmaß B der wenigstens einen Spritzgieß- bzw. Presswerkzeugkavität und dessen Hohlprofilumfangsmaß UH dem in Verfahrensschritt a) genannten Kavitätsumfangsmaß UW der wenigstens einen Spritzgieß- bzw. Presswerkzeugkavität entspricht. Erfindungsgemäß beziehen sich die Angaben zu den Hohlprofilaußenmaßen C und D des in Verfahrensschritt b) bereitzustellenden Hohlprofils auf 90° in Richtung zur Längsachse des Hohlprofils gesehen, und die Angabe zu UH bezieht sich auf den Bereich von Hohlprofilaußenmaß C und D. Erfindungsgemäß bedeutet deshalb dünnwandig im Rahmen der vorliegenden Erfindung ein Verhältnis von Durchmesser eines erfindungsgemäß einzusetzenden Hohlprofils zu dessen Wanddicke im Bereich von 5:1 bis 300:1.

Ein erfindungsgemäß einzusetzendes Hohlprofil kann nach verschiedenen Verfahren hergestellt werden, verschiedene Querschnittsformen aufweisen und aus verschiedenen Metallen bestehen. Vorzugsweise wird zu dessen Herstellung wenigstens eine der Techniken Strangpressen, Strangziehen, Extrudieren, Blasformen, Spritzgießen, Nahtlosziehen, Längsschweißen, Spiralschweißen, Wickeln und Pultrusion eingesetzt. Ein erfindungsgemäß einzusetzendes dünnwandiges Hohlprofil kann dabei einen kreisrunden, elliptischen, oder polygonförmigen - dreieckigen, viereckigen, fünfeckigen etc. bis hin zu einem vieleckigen - Querschnitt aufweisen.

Vorzugsweise weist ein in Verfahrensschritt b) bereitzustellendes Hohlprofil eine Wanddicke im Bereich von 0,1 bis 10,0mm auf. Ein erfindungsgemäß einzusetzendes Hohlprofil weist vorzugsweise wenigstens zwei Öffnungen, jeweils eine an den Stirnseiten, auf.

Erfindungsgemäß einzusetzende Hohlprofile sind aus einem Metall gefertigt, wobei Metall auch Legierungen umfasst.

Bevorzugte Metalle zur Herstellung erfindungsgemäß einzusetzender Hohlprofile sind Stahl, Aluminium, Magnesium, Kupfer, Titan, Zinn, Zink, Blei, Silber, Gold oder deren Legierungen, insbesondere Stahl, $AlMgS_{0,5}$ oder Messing.

Besonders bevorzugt werden Hohlprofile aus Aluminium oder Stahl, insbesondere Legierungen dieser beiden Materialien, eingesetzt. Dem Fachmann sind solche Legierungen aus der Halbzeugherstellung bekannt. Im Falle von Aluminiumlegierungen weiß der Fachmann, dass Magnesium die Festigkeit steigert, jedoch gleichzeitig stark die Umformbarkeit verringert, wohingegen Silizium hier nur geringe Auswirkungen hat. Diese beiden Eigenschaften werden von Mangan nur mäßig und von Zink nur gering beeinflusst. Kupfer steigert die Festigkeit stark und ist günstig für die Zähigkeit. (Siehe: W.Hartmann & Co. (GmbH & Co.KG), 2018: produktinfos/ff2/index_ger.html**)**. Im Falle von Aluminium- bzw. Magnesiumlegierungen sei zusätzlich verwiesen auf D. Altenpohl, Aluminium und Aluminiumlegierungen, Springer Verlag Berlin Heidelberg, 1965**.** Bezüglich Stahllegierungen sei verwiesen auf **DIN EN 10020, DIN EN 10208, DIN EN 10216, DIN EN 10217 und DIN EN 10130.**

Typische Verfahren der Halbzeugherstellung von Hohlprofilen sind dem Fachmann als Strangpressen, Walzen und Rollformen bekannt.

Vorzugsweise weisen erfindungsgemäß einzusetzende Hohlprofile bzw. die darin einzusetzenden Metalle bzw. Legierungen eine Bruchdehnung größer 3% auf. Die Bruchdehnung ist ein Kennwert der Werkstoffwissenschaften, der die bleibende Verlängerung der Zugprobe nach dem Bruch, bezogen auf die Anfangsmesslänge, angibt. Sie charakterisiert die Verformungsfähigkeit bzw. Duktilität eines Werkstoffes und kann, entsprechend dem charakteristischen mechanischen Verhalten der Werkstoffarten, unterschiedlich definiert und auch mit unterschiedlichen Symbolen bezeichnet sein. Die Bruchdehnung ist die auf die Anfangsmesslänge einer Probe im Zugversuch bezogene bleibende Längenänderung nach erfolgtem Bruch. Die Anfangsmesslänge wird vor dem Zugversuch durch Messmarken auf der Zugprobe festgelegt. Siehe: **https://de.wikipedia.org/wiki/Bruchdehnung**.

Sollten andere Herstellungsverfahren als die zuvor genannten Hohlprofil-Herstellungsverfahren zwecks einer Fertigungstoleranzminimierung angewendet werden, so können auch Materialien kleiner 3 % Bruchdehnung angewendet werden.

Erfindungsgemäß bevorzugt werden Metallrundrohre, Metallrechteckrohre oder Metallvierkantrohre als Hohlprofil eingesetzt. Derartige Rohre werden beispielsweise von Mifa Aluminium B.V., Rijnaakkade 6, 5928 PT Venlo, Niederlande, angeboten.

**Verfahrensschritt c)**

Verfahrensschritt c) betrifft das Bereitstellen wenigstens zweier Verschlusselemente. Bevorzugte Verschlusselemente sind Verschlussstopfen oder Verschlusskappen. Während Verschlussstopfen zu einem gewissen Teil in das Hohlprofil eingeführt werden, werden Verschlusskappen über die offenen Enden des Hohlprofils gestülpt. Voraussetzung für den Einsatz von Verschlusskappen ist, dass diese kongruent dem Außenmaß bzw. der Außenquerschnittsform des Hohlprofils entsprechen. Vorzugsweise erfolgt Verfahrensschritt c) mit der Maßgabe, dass der Umfang des Hohlprofils keine Aufweitung erfahren muss, um die Verschlusselemente aufzunehmen, was insbesondere beim Einsatz von Verschlussstopfen zu berücksichtigen ist.

Kongruent bedeutet in Verfahrensschritt c), dass die Form und die Abmessungen der nach innen auf dem Hohlprofil aufliegenden Fläche einer Verschlusskappe der Form und den Abmessungen der nach außen gerichteten Fläche eines erfindungsgemäß einzusetzenden Hohlprofils so weit wie möglich entspricht. Dadurch ergibt sich eine optimale Abdichtung des Fluids für den weiteren Verfahrensverlauf. Kongruent bedeutet im Falle eines Verschlussstopfens, dass dieser sich der nach innen gerichteten Fläche bzw. dem Innenumfang des erfindungsgemäß einzusetzenden Hohlprofils anpasst, um dieses gegen Austritt des in Verfahrensschritt e) einzusetzenden Fluids abzudichten.

Ein erfindungsgemäß einzusetzendes Verschlusselement kann nach verschiedenen Verfahren hergestellt werden, verschiedene Querschnittsformen aufweisen und aus verschiedenen Materialien bestehen. Vorzugsweise wird zu dessen Herstellung wenigstens eine der Techniken Drehen, Fräsen, Gießen, Spritzgießen, Pressen eingesetzt. Ein erfindungsgemäß einzusetzendes Verschlusselement kann dabei einen kreisrunden, elliptischen, oder polygonförmigen - dreieckigen, viereckigen, fünfeckigen etc. bis hin zu einem vieleckigen - Querschnitt aufweisen. Die einzusetzende Querschnittsform eines Verschlusselements wird der Fachmann entsprechend dem in Verfahrensschritt b) bereitzustellenden Hohlprofilquerschnitt auswählen. Auf vorzugsweise runde Hohlprofilquerschnitte infolge rohrförmiger Hohlprofile wird der Fachmann deshalb ebenfalls runde Verschlusselemente und nicht dreieckige, viereckige oder anders gestaltete Verschlusselemente einsetzen. Ebenso wird der Fachmann sich auch bei der Dimension eines Verschlusselements am Hohlprofilquerschnitt orientieren, wobei er in jedem Fall eine Abdichtung des Hohlprofils gegen Austritt des Fluids sicherstellen muss.

Erfindungsgemäß einzusetzende Verschlusselemente sind vorzugsweise aus Metall oder Kunststoff gefertigt, wobei der Begriff Metall erfindungsgemäß auch Legierungen umfasst. Bevorzugte Metalle sind Stahl, Aluminium, Magnesium, Kupfer, Titan, Zinn, Zink, Blei, Silber, Gold oder deren Legierungen, insbesondere Stahl oder Messing.

Alternativ sind erfindungsgemäß einzusetzende Verschlusselemente aus einem Kunststoff, vorzugsweise einem thermoplastischen oder duroplastischen Kunststoff gefertigt. Besonders bevorzugt wird als thermoplastischer Kunststoff ein Polyamid oder ein Polyester eingesetzt. Bevorzugt wird als Polyamid ein Polyamid 6 eingesetzt. Bevorzugt wird als Polyester ein Polyalkylenterephthalat eingesetzt, besonders bevorzugt Polybutylenterephthalat.

Ganz besonders bevorzugt wird ein in Verfahrensschritt c) bereitzustellendes Verschlusselement aus einem thermoplastischen Kunststoff mit wenigstens einem Füll- oder Verstärkungsstoff hergestellt. Bevorzugt werden als Füll- oder Verstärkungsstoff Glasfasern eingesetzt. Insbesondere bevorzugt werden auf 100 Massenanteile des thermoplastischen Kunststoffs 0,1 bis 85 Massenanteile Füll- oder Verstärkungsstoff eingesetzt.

Insbesondere bevorzugt wird ein in Verfahrensschritt c) bereitzustellendes Verschlusselement aus einem glasfaserverstärkten Polyamid 6 mit 15 bis 60 Massenanteilen Glasfasern auf 100 Massenanteile Polyamid eingesetzt.

Erfindungsgemäß einzusetzende Verschlusselemente auf Basis thermoplastischer Kunststoffe werden in einem dem erfindungsgemäßen Verfahren vorgelagerten Schritt durch Spritzgießen, Drehen, Fräsen, oder Pressen hergestellt.

Beim Design, dem Material und sonstigen Ausgestaltungsmerkmalen der in Verfahrensschritt c) bereitzustellenden Verschlusselemente wird der Fachmann sich an den Aufgaben eines Verschlusselements orientieren:

1. Einzusetzende Verschlusselemente müssen die Hohlprofilwandung gegen Fluidaustritt abdichten;

2. Einzusetzende Verschlusselemente werden durch werkzeugseitige Schieber oder Kernzüge und Verriegeln dieser Schieber oder Kernzüge gegen die Kräfte abgestützt, die durch den Spritzgieß- oder Pressdruck der aufzutragenden Kunststoffkomponente oder aber beim Schließvorgang des Spritzgieß- bzw. Presswerkzeugs auftreten können.

Vorzugsweise werden erfindungsgemäß einzusetzende Verschlusselemente jeweils zusammen mit wenigstens einer Abdichtung eingesetzt. Im Falle von vorzugsweise runden Verschlusselementen im Falle rohrförmiger Hohlprofile wird ein Verschlusselement mit wenigstens einer Abdichtung in Form eines O-Rings eingesetzt.

Gemäß **https://de.wikipedia.org/wiki/O-Ring** sind O-Ringe ringförmige Dichtungselemente. Der Name leitet sich vom runden (O-förmigen) Querschnitt eines Rings ab. O-Ringe sind nach ISO 3601 genormt, wobei die Größe von O-Ringen als Innendurchmesser • Schnurdurchmesser angegeben wird. O-Ringe sind praktisch in jedem Bereich der Industrie zu finden. Zumeist ist ein O-Ring bei statischen Abdichtungen vorhanden. Dabei sind die radial-statische sowie die axial-statische Abdichtung zu unterscheiden. Zu Ersterer gehören unter anderem die Anwendung bei Zylindern oder Rohren, zur axial-statischen Abdichtung die bei Flanschen, Platten sowie Verschlüssen. Vorzugsweise sind erfindungsgemäß einzusetzende Abdichtungen, insbesondere O-Ringe, aus Nitrilkautschuk (*Acrylnitril-Butadien-Kautschuk* (NBR)) gefertigt, dem Standardmaterial für Hydraulik- und Pneumatikanwendungen.

Vorzugsweise weist wenigstens ein Verschlusselement eine Vorrichtung zum Einfüllen des Fluids in das Hohlprofil bzw. zum Entleeren des Fluids aus dem Hohlprofil auf, insbesondere dann, wenn das Fluid innerhalb des Spritzgieß- bzw. Presswerkzeugs dem Hohlprofil zugeführt oder aus diesem abgeführt wird. Bevorzugte Vorrichtungen sind Schnellkupplungen mit automatischen Ventilen, die eine schnelle und leckagefreie Befüllung und Entleerung sowie ein Entlüften von inkompressiblen hydraulischen Flüssigkeiten zulassen. Derartige Schnellkupplungen sind dem Fachmann bekannt aus **https://de.wikipedia.org/wiki/Schlauchkupp-**

**lung.** Zur flexiblen und damit wirtschaftlichen Nutzung sind Leitungen oftmals nicht fest miteinander verbunden, sondern durch solche Schnell- bzw. Schlauchkupplungen trennbar gestaltet. Sie ermöglichen ein rationelles und zuverlässiges Anschließen und Auswechseln von Systemen, Aggregaten, Geräten etc.. Die Bauform von Schnell- bzw. Schlauchkupplungen ist abhängig vom Verwendungszweck, dem zu fördernden Medium (Luft, Gase, Wasser, Öl, Säure etc.) sowie von den Druckverhältnissen (Vakuum oder Überdruck) innerhalb oder außerhalb der Medien enthaltenden Komponenten.

Erfindungsgemäß bevorzugt einzusetzende Schnell- bzw. Schlauchkupplungen sind Hydraulikkupplungen, wie sie für hydraulische Geräte bzw. zum schnellen Wechsel von Werkzeugen eingesetzt werden. Im Falle Einsatzes von Wasser als erfindungsgemäßem Fluid oder eines wasserbasiertem Fluids werden Wasser-Schlauchkupplungen eingesetzt, wie sie dem Fachmann aus Industrie, Garten- und Landschaftsbau sowie im Heimbereich bekannt sind.

**Verfahrensschritt d)**

Im Verfahrensschritt d) erfolgt das Abdichten der beiden offenen Enden des Hohlprofils mittels der in c) bereitgestellten Verschlusselemente. Vorzugsweise werden hierzu Verschlusselemente verwendet, die mit möglichst geringem Kraftaufwand in axialer Richtung des Hohlprofils als Stopfen in die offenen Enden hinein geschoben oder gepresst, bzw. als Kappen über die offen Enden des Hohlprofils geschoben, gestülpt oder gepresst, werden. Vorzugweise weisen diese Verschlusselemente radial wirkende Dichtungen auf, insbesondere Dichtungen in Form von O-Ringen. Die radial wirkenden Reibkräfte der Verschlusselemente und Dichtungen sind so zu bemessen, dass die Verschlusselemente nach dem Einbringen bzw. Überschieben in ihrer Position verharren und ein Befüllen sowie ein Entlüften des entstandenen Hohlraums zulassen, ohne dabei ihre Position zu verändern.

Erfindungsgemäß bevorzugt erfolgt das Abdichten außerhalb des Spritzgieß- bzw. Presswerkzeugs, d.h. vor dem Einlegen des Hohlprofils in das Spritzgieß- bzw. Presswerkzeug.

Alternativ kann aber auch das Abdichten innerhalb des Spritzgieß- bzw. Presswerkzeugs erfolgen. Vorzugweise erfolgt dieser Vorgang vollautomatisch mittels zweier Werkzeugschieber oder Werkzeugkernzüge, die nach dem Einlegen des Hohlprofils und nach dem Schließen des Werkzeugs, in die offen Enden des Hohlprofils zusammen mit den Verschlusselementen, welche vorzugsweise Bestandteil der Schieber oder Kernzüge sind, hineinfahren, diese abdichten, so dass der Innenraum des Hohlprofils befüllt, entlüftet und nach Verfahrensschritt i) wieder entleert werden kann. Zu diesem Zweck weisen die Schieber oder Kernzüge analog zu den Verschlusselementen eine Vorrichtung zum Einfüllen oder Entleeren des Fluids sowie zum Entlüften des Hohlprofils auf.

Vorzugsweise wird das Hohlprofil durch die Verschlusselemente und die Schieber oder Kernzüge des Spritzgieß- bzw. Presswerkzeugs gegen Innendrücke im Bereich von 1 bis 1000 bar abgedichtet, die während des Verfahrensschritts i) und/oder des Verfahrensschritts h) durch Einwirken des Fluids auf die Innenwand des Hohlprofils auftreten können.

Die Funktionsweise von Kernzügen oder Schiebern in einem Spritzgießwerkzeug sind dem Fachmann bekannt. Darstellungen bzw. Erläuterungen finden sich in **Plast-Spritzer.de, info@plast-spritzer.de, C. Gottesleben, Hermannsburg, 2015** oder in **https://de.wikipedia.org/wiki/Spritzgie%C3%9Fmaschine.** Vorzugweise werden erfindungsgemäß einzusetzende Schieber oder Kernzüge aus den im Spritzgieß- bzw. Presswerkzeugbau üblichen Werkzeugstählen gefertigt und gehärtet. Zum Einsatz kommen vorzugsweise gehärtete Schieber oder Kernzüge mit einer Härte nach Rockwell im Bereich von 50 bis 62 HRC.

**Verfahrensschritt e)**

Im Verfahrensschritt e) erfolgt das Einbringen des Fluids in das abgedichtete Hohlprofil durch wenigstens eines der Verschlusselemente.

Wird der Verfahrensschritt d) innerhalb des Spritzgieß- bzw. Presswerkzeugs durchgeführt, erfolgt die Zuführung des Fluids in das Hohlprofil im Verfahrensschritt e) durch wenigstens eines der Verschlusselemente ebenfalls innerhalb des Spritzgieß- bzw. Presswerkzeugs.

Vorzugsweise werden als Fluid inkompressible, hydraulische Fluide eingesetzt. Im Gegensatz zu kompressiblen Fluids ist ein inkompressibles Fluid eine Flüssigkeit, dessen Dichte nicht vom Druck abhängt.

Dies bedeutet umgekehrt, dass Fluide, deren Dichte sich beispielsweise durch thermische Einflüsse ändert, inkompressibel sein können. Da diese Effekte in der Praxis meist erheblich kleiner sind als Dichteänderungen auf Grund von Druckänderungen, wird ein Fluid erfindungsgemäß als inkompressibel angesehen, wenn die Dichte entlang jeder Trajektorie konstant ist. Konstante Dichte insgesamt ist jedoch **kein** Kriterium für Inkompressibilität.

Inkompressible Fluide existieren in der Realität nicht, sie stellen vielmehr eine Idealisierung dar, die viele Berechnungen bei vernachlässigbarem Fehler erheblich vereinfacht, z. B. Wasser in Wasserleitungen unter Normalbedingungen. In bestimmten Anwendungsfällen der Hydraulik bzw. der Fluidtechnik muss die geringe Kompressibilität einer Hydraulikflüssigkeit jedoch unbedingt berücksichtigt werden.

Die Inkompressibilität eines Fluids ist gleichbedeutend mit dem Verschwinden der Kompressibilität K, die als die relative Volumenänderung bei Druckänderung und konstanter Temperatur definiert ist:

$$\kappa = 0$$
$$\Leftrightarrow -\frac{1}{V}\left(\frac{\partial V}{\partial p}\right)_T = 0$$
$$\Leftrightarrow \left(\frac{\partial V}{\partial p}\right)_T = 0$$

Diese Formulierung leitet sich ab aus der Kontinuitätsgleichung als Divergenzfreiheit der Strömung, bei Vernachlässigung einer etwaigen Temperaturabhängigkeit:

$$\vec{\nabla} \cdot \vec{v} = 0 \Leftrightarrow \operatorname{div} \vec{v} = 0$$

Das zugrundeliegende mathematische Modell sind die Gleichungen von Navier-Stokes. Siehe: **https://de.wikipedia.org/wiki/Inkompressibles_Fluid.**

Als hydraulisch wird ein Fluid bezeichnet, das zur Übertragung von Energie (Volumenstrom, Druck) in Hydrauliksystemen in der Fluidtechnik benötigt wird. **https://de.wikipedia.org/wiki/Hydraulikfl%C3%BCssigkeit** unterscheidet:

- Hydraulikflüssigkeiten auf Basis von Mineralölen,
- Hydraulikflüssigkeiten für die Lebensmittel- und Futterindustrie,
- Biologisch schnell abbaubare Hydraulikflüssigkeiten,
- Schwer entflammbare Flüssigkeiten, und
- Wasser.

Erfindungsgemäß bevorzugt sind davon die in industriellen Produktionsbetrieben vorzugsweise einzusetzenden schwer entflammbaren Fluide und Wasser. Erfindungsgemäß bevorzugte - schwer entflammbare - Fluide sind

**HFA:** Öl-in-Wasser-Emulsionen bzw. Lösungsprodukte mit einem Wassergehalt von mehr als 80 %, oder Konzentrate auf Mineralölbasis oder auf Basis von löslichen Polyglykolen;

**HFB:** Wasser-in-Öl-Emulsionen mit einem Wassergehalt von mehr als 40 % oder Mineralöl;

**HFC:** Wasserglykole mit einem Wassergehalt über 35 % oder Polyglykol-Lösung;

**HFD:** Wasserfreie synthetische Flüssigkeiten mit einer höheren Dichte als Mineralöl oder Wasser.

Die Entlüftung des Hohlprofilinnenraums erfolgt vorzugsweise durch Auffüllen desselben mit einem Fluid, vorzugsweise bis zu 100% des Volumens des Innenraums bis keine Luft mehr im Innenraum verbleibt. Bevorzugte Vorrichtungen sind vollautomatische Anlagen zum Befüllen und Entleeren, sowie zum Entlüften von Fluiden, vorzugsweise inkompressiblen hydraulischen Fluiden. Dem Fachmann sind solche Vorrichtungen bekannt beispielsweise zum Befüllen bzw. Entleeren hydraulischer Anlagen; siehe hierzu auch DE 202008003682 U1.

**Verfahrensschritt f)**

Neben der Gestaltung des in Verfahrensschritt b) bereitzustellenden, metallbasierten Hohlprofils ist ebenso die Gestaltung des in Verfahrensschritt a) bereitzustellenden Spritzgieß- bzw. Presswerkzeugs wichtig, damit das erfindungsgemäße Verfahren, insbesondere das Einlegen und das Abdichten der Spritzgieß- bzw. Presskavität, problemlos funktioniert.

Das Einlegen des Hohlprofils in die wenigstens eine Kavität erfolgt dabei **ohne** dass eine Aufweitung des Hohlprofils erfolgt. Das Abdichten der Fuge zwischen Hohlprofil und der Kavität des Spritzgieß- bzw. Presswerkzeugs, die sich an den mit Kunststoffauftrag zu versehenden Hohlprofilabschnitt anschließt, erfolgt allein durch Formänderung des Umfangs des Hohlprofils beim Schließen des Spritzgieß- bzw. Presswerkzeugs , wobei der Hohlprofilumfang UH selber gleich bleibt.

Im Falle des bevorzugten Einsatzes von Hohlprofilen mit rundem Umfang, wobei das Hohlprofil die Form eines Rohres hat, erfolgt eine Formänderung vorzugsweise zu einer Ellipse. Im Falle des Einsatzes von Hohlprofilen mit elliptischem Umfang erfolgt die Formänderung vorzugsweise zu einem runden Umfang.

Vorzugsweise liegt das Verhältnis des Hohlprofilumfangsmaßes UH zum inneren Kavitätsumfangsmaß UW der wenigstens einen Werkzeugkavität des Formwerkzeugs bei 1 : 1. Es ist für den Fachmann außerordentlich überraschend, dass allein durch die Schließbewegung des Spritzgieß- bzw. Presswerkzeugs und die daraus resultierende Formänderung des Hohlprofils gegenüber dem inneren Umfang der Werkzeugkavität UW der Spalt bzw. die Fuge zuverlässig verschlossen und damit für den Spritzgieß- bzw. Pressvorgang abdichtet wird, und selbst bei einem toleranzbedingten Übermaß des Hohlprofilumfangs UH um bis zu +5%, überschüssiges Material der Hohlprofilwandung nicht in die Trennebenen des Spritzgieß- bzw. Presswerkzeugs hineingepresst wird. Dadurch ist sichergestellt, dass es weder zu Beschädigungen des Werkzeugs, insbesondere zu Beschädigungen der Trennebenen, noch zu Beschädigungen des Hohlprofils selbst kommen kann. Diese Eigenschaft des erfindungsgemäßen Verfahrens, die Formänderung des Hohlprofils mit dem Schließen des Spritzgieß- bzw. Presswerkzeugs und damit gleichzeitig das Abdichten der Werkzeugkavität gegenüber der Hohlprofilaußenfläche erlaubt das anschließende und örtlich begrenzte Auftragen von Kunststoff auf das Metall basierte Hohlprofil in Verfahrensschritt e) ohne im Innern des Hohlprofils positionierte und dem Spritz- bzw. Pressdruck entgegenwirkende Hilfsmittel und damit gegenüber dem Stand der Technik ohne zusätzliche Verfahrensschritte und unter deutlich verkürzten Zykluszeiten.

Vorzugsweise weisen ein erfindungsgemäß einzusetzendes Spritzgieß- bzw. Presswerkzeug und auch ein erfindungsgemäß einzusetzendes Metall basiertes Hohlprofil folgende Merkmale auf, damit sich Letzteres mit all seinen Maß- und Formtoleranzen ohne Zwang in das in Verfahrensschritt a) bereitgestellte Werkzeug einlegen lässt:

**fI.** Das Spritzgieß- bzw. Presswerkzeug muss so beschaffen sein, dass es die Spritzgieß- bzw. Presskavitäten zu den Bereichen des Hohlprofils, in denen in Verfahrensschritt e) kein Auftrag von Kunststoff erfolgen wird, beim Schließen des Werkzeugs abdichtet. Dazu sind im Spritzgieß- bzw. Presswerkzeug an den axialen Enden der wenigstens einen Spritzgieß- bzw. Presskavität Kontaktflächen im Werkzeug notwendig, die das Hohlprofil während des Schließens des Werkzeugs von dem Hohlprofilaußenmaß C auf das Werkzeugmaß A verpressen, wodurch sich gleichzeitig das Hohlprofilaußenmaß D auf das Werkzeugmaß B ändert, aber das Umfangsmaß UH des Hohlprofils gleich dem Umfangsmaß UW der wenigstens einen Spritzgießwerkzeug- bzw. Presswerkzeugkavität bleibt;

**fII.** In einer Ausführungsform sind die Kontaktflächen der wenigstens zwei Werkzeughälften zum Hohlprofil im Spritzgieß- bzw. Presswerkzeug so ausgeführt, dass ein um + 5% größeres Umfangsmaß UH des Hohlprofils über die in **fI.** beschriebene Verpressung hinaus auf das gleiche in **fI.** beschriebene Umfangsmaß UW der Spritzgieß- bzw. Presskavität zusätzlich verpresst wird;

**fIII.** Die in **fI.** und **fII.** genannten Kontaktflächen der wenigstens zwei Werkzeughälften im Spritzgieß- bzw. Presswerkzeug umfassen das Hohlprofil bei geschlossenem Werkzeug in seinem gesamten Umfang und weisen vorzugsweise eine Breite, d. h. eine Ausdehnung in axialer Richtung des Hohlprofils gesehen, im Bereich von 1,0 bis 50,0mm auf, bevorzugt 3,0 bis 25,0mm, besonders bevorzugt 5,0 bis 10,0mm;

**fIV.** In einer Ausführungsform sind die Kontaktflächen der wenigstens zwei Werkzeughälften zum Hohlprofil im Spritzgieß- bzw. Presswerkzeug so ausgeführt, dass diese Bereiche im Werkzeug durch gehärtete Einsätze dargestellt werden. Diese gehärteten Einsätze weisen vorzugsweise eine Härte nach Rockwell im Bereich von 50 bis 62 HRC auf. Damit liegt die Härte im Bereich üblicher Biege- und Stanzwerkzeuge. Siehe: **https://de.wikipedia.org/wiki/Rockwell_(Einheit);**

**fV.** Vorzugsweise bietet das Spritzgieß- bzw. Presswerkzeug zwischen seinen Kontaktflächen außerhalb der Spritzgieß- bzw. Presskavitäten einen Freiraum rund um das Hohlprofil herum. Vorzugsweise beträgt bzw. liegt dieser Freiraum im Bereich von 1,0 bis 10,0mm.

**Verfahrensschritt g)**

Im Verfahrensschritt g) erfolgt das Abstützen der wenigstens zwei, die beiden offenen Enden des Metall basierten Hohlprofils verschließenden Verschlusselemente durch werkzeugseitige Schieber oder Kernzüge. Diese Schieber sind innerhalb des Spritzgieß- bzw. Presswerkzeugs so positioniert, dass sie nach Einlegen des Hohlprofils und Schließen des Spritzgieß- bzw. Presswerkzeugs den offenen Enden des Hohlprofils zugeführt werden, dabei die in Verfahrensschritt d) in einer Verfahrensausführung außerhalb eingesetzten Verschlusselemente abstützen, oder aber - wie alternativ beschrieben - die Verschlusselemente auf die offenen Enden des Hohlprofils aufsetzen, oder in die offenen Enden des Hohlprofils einführen und damit das Hohlprofil verschließen und abdichten. Dazu werden die Schieber oder Kernzüge nach dem Verfahrensschritt h) mit den im Spritzgieß- bzw. Presswerkzeugbau üblichen Mechanismen verriegelt, so dass während des Verfahrens Drücke im Bereich von 1 bis 1000 bar auf die innere Wandung des Hohlprofils einwirken können. Entsprechend anzuwendende Verriegelungsmechanismen sind dem Fachmann aus dem Spritzgießmaschinen- und Spritzgießwerkzeugbau bekannt. Siehe: Euro-Mold Special, Technischer Fachverlag Möller e.K., Velbert, 1.12.- 4.12.2010**.**

**Verfahrensschritt h)**

Im Verfahrensschritt d) erfolgt das Schließen der wenigstens einen Kavität des Spritzgieß- bzw. Presswerkzeugs sowie das Verpressen des Hohlprofils mit der Werkzeugschließbewegung in Schließrichtung der wenigstens einen Kavität, wobei eine Formänderung des in b) bereitgestellten Hohlprofils dahingehend stattfindet, dass die Außenfläche des Hohlprofils nach Beendigung des Schließvorgangs der Innenform der Kavität des in Verfahrensschritt a) bereitgestellten Werkzeugs, im Bereich der Kontaktflächen an den axialen Enden der wenigstens einen Spritzgießwerkzeug- bzw. Presswerkzeugkavität, entspricht. Durch das Schließen der wenigstens einen Kavität wird das Außenmaß C gleich dem Werkzeugmaß A und das Außenmaß D gleich dem Werkzeugmaß B. Das Hohlprofilumfangsmaß UH entspricht weiterhin dem Kavitätsumfangsmaß UW der Spritzgieß- bzw. Presswerkzeugkavität.

Mittels der unter Verfahrensschritt c) beschriebenen Kontaktflächen im Spritzgieß- bzw. Presswerkzeug wird im Verfahrensschritt d) das Hohlprofil eindeutig in der wenigstens einen Kavität gehalten und die für das Spritzgießen bzw. für das Pressen vorgesehenen Kavitäten am Hohlprofil werden abgedichtet.

Für das Schließen des Spritzgieß- bzw. Presswerkzeugs wird eine Schließkraft benötigt, die das Hohlprofil in eine durch die Ausgestaltung der Kavität des Spritzgieß- bzw. Presswerkzeugs definierte neue Form presst und die wenigstens eine Kavität abdichtet. Die Höhe der aufzuwendenden Schließkraft richtet sich zum einen nach der Form des in Verfahrensschritt b) bereitgestellten metallbasierten Hohlprofils. Ferner sind Gestalt, Dimensionen, Wandstärke/Wanddicke und Materialbeschaffenheit des Metall basierten Hohlprofils für die Vorauskalkulation der Schließkraft entscheidend, die der Fachmann bei der Auslegung des erfindungsgemäßen Prozesses berücksichtigen muss.

Die für das Verpressen des Hohlprofils in Verfahrensschritt h) anzuwendende Presskraft liegt vorzugsweise unterhalb der Schließkraft des Spritzgießwerkzeugs im Falle, dass ein Spritzgießverfahren für den Kunststoffauftrag angewendet wird.

Im Falle des Aufpressens eines Kunststoffauftrags durch Formpressen liegt die für das Verpressen des Hohlprofils in Verfahrensschritt h) anzuwendende Presskraft im Bereich der Schließkraft des zu diesem Zweck einzusetzenden Presswerkzeugs +/- 10%.

Die Höhe der Schließkraft des Spritzgieß- bzw. Presswerkzeugs richtet sich andererseits auch nach der projizierten Fläche für den Kunststoffauftrag in Verfahrensschritt e) und im Falle des Einsatzes von Spritzguss den Einspritzdrücken die benötigt werden, um die entsprechenden Kunststoffe im Verfahrensschritt i) aufzutragen.

Erfindungsgemäß bevorzugt erfolgt das Verpressen in Verfahrensschritt h) bis folgendes gilt:

Hohlprofilaußenmaß C = Werkzeugmaß A **und**

Außenmaß D = Werkzeugmaß B **und**

Hohlprofilumfangsmaß UH = Werkzeugkavitätsumfangsmaß UW.

In diesem Fall ist die Kavität zum Hohlprofil umfänglich abgedichtet und das Werkzeug an seinen Kontaktflächen am geringsten belastet.

Tritt der Fall ein, dass das Hohlprofilaußenmaß C oder D oder das Hohlprofilumfangsmaß UH zu klein ist und die Verformung durch das Werkzeug nicht ausreicht, um als Ergebnis Hohlprofilaußenmaß D = Werkzeugmaß B zu erreichen, so verbliebe ein Spalt. In diesem Fall müssen die Toleranzen des Hohlprofils so gewählt werden, dass dieser Fall nicht eintrifft.

Ist das Hohlprofilaußenmaß A oder das Hohlprofilumfangsmaß UH zu groß gewählt, dann erreicht das Hohlprofilaußenmaß D das Werkzeugmaß B bevor das Spritzgieß- bzw. Presswerkzeug vollständig geschlossen ist, was zu einer tangentialen Stauchung der Hohlprofilwandung führt. Auch in diesem Fall sind deshalb die Toleranzen des Hohlprofils so zu wählen, dass ein Stauchen maximal bis zur Druckdehnung des Materials eintritt, aber kein Ausweichen der Hohlprofilwandung in Hohlräume zwischen die Trennflächen des Spritzgieß- bzw. Presswerkzeugs eintritt. In diesem Fall ist die Kavität zum Hohlprofil ebenfalls umfänglich abgedichtet aber das Werkzeug wird an den Kontaktflächen höher belastet.

**Verfahrensschritt i)**

Im Verfahrensschritt i) erfolgt das Verriegeln der Schieber oder Kernzüge und damit das gleichzeitige Blockieren der in Verfahrensschritt c) bereitgestellten wenigstens zwei Verschlusselemente gegen ein Herauspressen durch das in Verfahrensschritt j) beschriebene Auftragen von Kunststoff aus den offenen Enden des Hohlprofils.

**Verfahrensschritt j)**

Im Verfahrensschritt j) erfolgt der Auftrag von Kunststoff, vorzugsweise in Form einer Schmelze, auf die Außenwandung des Hohlprofils. Die in Verfahrensschritt j) anzuwendende Höhe der Einspritz- und Nachdrücke, die Einspritzgeschwindigkeiten, die Umschaltzeiten zwischen Einspritzen und Nachdrücken, die Nachdrückzeiten, die Schmelze- und Werkzeugtemperaturen und das Restmassepolster des Kunststoffauftrags sind zudem abhängig von den einzusetzenden Kunststoffmaterialien, der Geometrie der mit Kunststoff aufzufüllenden Kavität(en), der Position des Auftrags, im Falle des Spritzgusses des Angusses, und der Belastbarkeit des in Verfahrensschritt b) bereitgestellten und in Verfahrensschritt f) eingelegten Hohlprofils, die der Fachmann bei der Auslegung des erfindungsgemäßen Prozesses im Voraus berücksichtigen muss.

Durch das Verpressen des Hohlprofils im Verfahrensschritt h), insbesondere mittels der in Verfahrensschritt h) beschriebenen Werkzeugkontaktflächen, erzielt man eine Abdichtung des Spritzgieß- bzw. Presswerkzeugs gegen Austritt des in Verfahrensschritt e) aufzutragenden Kunststoffauftrags zwischen mit Kunststoffauftrag und nicht mit Kunststoffauftrag beaufschlagten Bereichen des Hohlprofils innerhalb der Spritzgieß- bzw. Presswerkzeugkavität. In einer Ausführungsform sind die Werkzeugkontaktflächen so ausgeführt, dass diese Bereiche im Werkzeug durch gehärtete Einsätze dargestellt werden.

Die in Verfahrensschritt f) unter Punkt **fIV.** beschriebene Ausführung gehärteter Werkzeugeinsätze dient im Verfahrensschritt h) und im Verfahrensschritt j) der Reduzierung des Verschleißes der Werkzeugkontaktflächen, da dies die einzigen Kontaktstellen zwischen Spritzgieß- bzw. Presswerkzeug und Hohlprofil sind und die gehärteten Werkzeugeinsätze vorzugsweise eine deutlich höhere Härte besitzen, als der Werkstoff des Hohlprofils.

Der Auftrag von Kunststoff auf das wenigstens eine Hohlprofil erfolgt in Verfahrensschritt j) vorzugsweise durch Spritzgießen oder Formpressen, insbesondere Spritzgießen.

### Kunststoffauftrag durch Spritzgießen

Nach DIN 8580 werden Fertigungsverfahren zur Herstellung geometrischer fester Körper in sechs Hauptgruppen unterteilt. Das Spritzgießen ist der Hauptgruppe 2, dem Urformen zugeordnet. Es eignet sich insbesondere für Massenartikel. Die Nacharbeit beim Spritzgießen ist gering bzw. kann ganz entfallen und selbst komplizierte Formen und Konturen können in einem Arbeitsgang gefertigt werden. Das Spritzgießen als Fertigungsverfahren in der Kunststoffverarbeitung ist dem Fachmann prinzipiell bekannt; Siehe: **https://de.wikipedia.org/wiki/Spritzgie%C3%9Fen.**

Beim Spritzgießen wird mit einer Spritzgießmaschine der zu verarbeitende Kunststoff verflüssigt bzw. plastifiziert und in eine Form, dem Spritzgießwerkzeug, unter Druck eingespritzt. Im Werkzeug geht der Kunststoff durch Abkühlung oder durch eine Vernetzungsreaktion wieder in den festen Zustand über und wird nach dem Öffnen des Werkzeugs als Fertigteil entnommen. Der Hohlraum bzw. die Kavität eines Werkzeugs bestimmt dabei die Form und die Oberflächenstruktur des erstarrten Kunststoffauftrags im Enderzeugnis, in der vorliegenden Erfindung im Kunststoff-Metall Verbundbauteil. Es sind heute durch Spritzgießen Erzeugnisse im Gewichtsbereich von wenigen zehntel Gramm bis zu einer Größenordnung von 150 kg herstellbar.

Das Spritzgießen erlaubt eine nahezu freie Wahl von Form und Oberflächenstruktur, insbesondere glatte Oberflächen, Narbungen für berührungsfreundliche Bereiche, Muster, Gravuren und Farbeffekte. Zusammen mit der Wirtschaftlichkeit macht dies das Spritzgießen zum weitverbreitetsten Verfahren zur Massenherstellung von Kunststoffteilen in praktisch allen Bereichen.

Eine Spritzgießapparatur umfasst wenigstens folgende Bauteile: 1. Schnecke 2. Einfülltrichter 3. Granulat 4. Plastifizierzylinder 5. Heizelemente 6. Werkzeug.

Innerhalb einer Spritzgießapparatur erfolgen die Schritte 1. Plastifizieren und Dosieren, 2. Einspritzen, 3. Nachdrücken und Abkühlen, und 4. Entformen.

### 1. Plastifizieren und Dosieren

Der thermoplastische Kunststoff rieselt in Form eines Granulats in die Gänge einer rotierenden Schnecke ein. Das Granulat wird in Richtung Schneckenspitze gefördert und durch die Wärme des Zylinders und die Friktionswärme, die beim Zerteilen und Scheren des Materials entsteht, erwärmt und aufgeschmolzen. Die Schmelze sammelt sich vor der Schneckenspitze, da die Austrittsdüse zunächst geschlossen ist. Da die Schnecke axial beweglich ist, weicht sie durch den Druck zurück und schraubt sich ähnlich einem Korkenzieher aus der Masse heraus. Die Rückwärtsbewegung wird durch einen Hydraulikzylinder oder elektrisch gebremst, so dass sich in der Schmelze ein Staudruck aufbaut. Dieser Staudruck in Verbindung mit der Schneckenrotation verdichtet und homogenisiert den als Spritzgießmaterial zu verspritzenden Kunststoff.

Die Schneckenposition wird gemessen und sobald sich eine für das Werkstückvolumen ausreichende Spritzgießmaterialmenge angesammelt hat, ist der Dosiervorgang beendet und die Schneckenrotation wird eingestellt. Ebenso wird die Schnecke aktiv oder passiv entlastet, so dass die Schmelze dekomprimiert wird.

### 2. Einspritzen

In der Einspritzphase wird die Spritzeinheit an die Schließeinheit gefahren, mit der Austrittsdüse angedrückt und die Schnecke rückseitig unter Druck gesetzt. Dabei wird die Schmelze unter hohem Druck, vorzugsweise bei einem Druck im Bereich von 500 bis 2000bar, durch die geöffnete Austrittsdüse und den Anguss bzw. das Angusssystem des Spritzgießwerkzeugs in den formgebenden Hohlraum gedrückt. Eine Rückstromsperre verhindert dabei ein Zurückströmen der Schmelze in Richtung Einfülltrichter.

Während des Einspritzens wird versucht, ein möglichst laminares Fließverhalten der Schmelze zu erreichen. Das heißt, die Schmelze wird im Spritzgießwerkzeug dort, wo sie die gekühlte Werkzeugwand berührt, sofort abgekühlt und bleibt erstarrt "kleben". Die nachrückende Schmelze wird durch den dadurch verjüngten Schmelzkanal mit noch höherer Geschwindigkeit und noch mehr Scherdeformation gedrückt und vorne an der Schmelzfront zum Rand hin dehndeformiert. Es überlagert sich Wärmeabfuhr über die Werkzeugwand und Wärmezufuhr durch Schererwärmung. Die hohe Einspritzgeschwindigkeit erzeugt in der Schmelze eine Schergeschwindigkeit, welche die Schmelze leichter fließen lässt. Ein schnelles Einspritzen ist nicht anzustreben, denn durch hohe Schergeschwindigkeiten kann ein Molekülabbau innerhalb des Kunststoffs verstärkt auftreten. Auch die Oberfläche des durch Spritzguss herzustellenden Erzeugnisses, dessen Aussehen und schließlich der Orientierungszustand der Kunststoffmoleküle werden durch die Einspritzphase beeinflusst.

### 3. Nachdrücken und Abkühlen

Da das Werkzeug kälter ist als die Kunststoffmasse, vorzugsweise weist das Werkzeug eine Temperatur im Bereich von 20 bis 120°C auf und die Kunststoffmasse weist vorzugsweise eine Temperatur im Bereich von 200 bis 300°C auf, kühlt die Schmelze in der Form ab und erstarrt bei Erreichen des Erstarrungspunkts des jeweils eingesetzten Kunststoffs, vorzugsweise des Thermoplasten bzw. des Thermoplast basierten Compounds.

Compoundieren ist ein Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern und umfasst die Verfahrensoperationen Fördern, Aufschmelzen, Dispergieren, Mischen, Entgasen und Druckaufbau. siehe: **https://de.wikipedia.org/wiki/Compoundierung.** Mit Compound bezeichnet man deshalb einen mit Füllstoffen oder Additiven versetzten Thermoplasten oder Duroplasten.

Das Abkühlen bei Erreichen des Erstarrungspunkts des jeweils eingesetzten Kunststoffs geht einher mit einer Volumenschwindung, die sich nachteilig auf Maßhaltigkeit und Oberflächenqualität des zu fertigenden Erzeugnisses, in der vorliegenden Erfindung des im Verfahrensschritt j) zu fertigenden und mit der Außenseite des Hohlprofils formschlüssig zu verbindenden Kunststoffauftrags auswirkt. Um diese Schwindung teilweise zu kompensieren, wird auch nach Füllung der Form ein reduzierter Druck aufrechterhalten, damit Kunststoffmaterial nachfließen und die Schwindung ausgleichen kann. Dieses Nachdrücken kann solange erfolgen, bis der Anguss erstarrt ist.

Nach Beendigung des Nachdrückens kann die Austrittsdüse geschlossen werden und in der Spritzeinheit bereits der Plastifizier- und Dosiervorgang für das nächste Formteil beginnen. Der Kunststoffauftrag in der Form kühlt in der Restkühlzeit weiter ab, bis auch die Seele, der flüssige Kern des Kunststoffauftrags, erstarrt ist und eine zum Entformen hinreichende Steifigkeit erreicht ist. Dieser Vorgang wird auch als Solidifikation bezeichnet und erfolgt erfindungsgemäß für den Kunststoffauftrag im Verfahrensschritt k).

Die Spritzeinheit kann dann von der Schließeinheit wegbewegt werden, da kein Kunststoff mehr aus dem Anguss austreten kann. Dies dient dazu, einen Wärmeübergang von der wärmeren Austrittsdüse auf den kälteren Anguss zu verhindern.

## 4. Entformen

Zum Entformen eines spritzgegossenen Erzeugnisses, bzw. des mit Kunststoffauftrag versehenen Hohlprofils im erfindungsgemäßen Verfahrensschritt l), öffnet sich die Kavität und das Erzeugnis wird durch in die Kavität eindringende Stifte ausgeworfen und fällt entweder herunter (Schüttgut) oder wird durch Handlinggeräte aus dem Spritzgießwerkzeug entnommen und geordnet abgelegt oder direkt einer Weiterverarbeitung zugeführt. Vorzugsweise ist dafür das Spritzgieß- bzw. Presswerkzeug mit einer Auswerferseite versehen.

Der Anguss muss entweder durch separate Bearbeitung entfernt werden oder wird beim Entformen automatisch abgetrennt. Auch angussloses Spritzgießen ist mit Heißkanalsystemen, bei denen das Angusssystem ständig über der Erstarrungstemperatur des einzusetzenden Kunststoffs, vorzugsweise Thermoplasten, Duroplasten oder Compounds, bleibt und das enthaltene Material somit für den nächsten Schuss verwendet werden kann, möglich.

## Kunststoffauftrag durch Formpressen

Das Formpressen gehört zur Familie der Urformverfahren. Formpressen ist ein Herstellungsverfahren für Kunststoffe, geeignet für leicht gewölbte oder flache Bauteile. Haupteinsatzgebiet dieses Verfahrens ist die Automobilindustrie, wo es zur Produktion größerer Bauteile mit zweidimensionaler oder einfacher dreidimensionaler Struktur, insbesondere Motorhauben, Stoßfänger, Spoiler oder Heckklappen eingesetzt wird. Es können sowohl duroplastische als auch thermoplastische Kunststoffe verarbeitet werden.

Zu Beginn des Formpressverfahrens wird die zu verarbeitende Formmasse in die vorgesehene, aufgeheizte Kavität eingebracht. Anschließend wird die Kavität unter Einsatz eines Druckkolbens geschlossen. Durch den Druck erlangt die Formmasse die vom Werkzeug vorgegebene Form. Bei duroplastischen Kunststoffen dient die Temperatur zur Beeinflussung des Aushärtevorgangs, bei Thermoplasten zum Schmelzen des Kunststoffs. Nach dem Abkühlen kann das fertige Erzeugnis aus dem Formwerkzeug entnommen und ggf. nach- oder weiterverarbeitet werden.

Das Formpressverfahren eignet sich vor allem für mittelgroße Stückzahlen, da in diesem Fall die Werkzeugkosten in der Regel geringer sind als zum Beispiel beim Spritzgießen. Das Formpressen kann auch zur Herstellung von Faserverbundwerkstoffen eingesetzt werden, u.a. zur Herstellung von faserverstärkten Kunststoffen.

Siehe: **https://de.wikipedia.org/wiki/Formpressen**

Ein bekanntes Formpressverfahren für thermoplastische Kunststoffe ist vor allem das D-LFT (Direct Long Fiber Thermoplastic Molding) Verfahren, wie es beispielsweise in DE-A 43 30 860 beschrieben ist.

Bekannte Formpressverfahren für duroplastische Kunststoffe sind vor allem das SMC-Verfahren (Sheet Molding Compound) und das BMC-Verfahren (Bulk Transfer Molding Compound). Ein SMC-Verfahren ist beispielsweise in EP 1 386 721 A1 beschrieben. Zu BMC-Verfahren siehe: Handbuch Spritzgießen, ISBN 978 3 446 15632 6, 1. Auflage 2001, Seiten 1022 - 1024, Carl Hanser Verlag**.**

## In Verfahrensschritt j) aufzutragende Kunststoffe

Im Verfahrensschritt j) einzusetzende Kunststoffe sind vorzugsweise thermoplastische oder duroplastische Kunststoffe, besonders bevorzugt thermoplastische Kunststoffe.

Bevorzugte thermoplastische Kunststoffe sind Polyamide (PA), Polyester, insbesondere Polybutylenterephthalat (PBT) oder Polyethylenterephthalat (PET), Polyethylen (PE), Polypropylen (PP) oder Polyvinylchlorid (PVC). Besonders bevorzugt wird als thermoplastischer Kunststoff im Verfahrensschritt j) Polyamid oder Polyester eingesetzt. Bevorzugt wird als Polyamid ein Polyamid 6 eingesetzt. Insbesondere wird als Polyester PBT eingesetzt. Bevorzugte duroplastische Kunststoffe sind Epoxidharze, vernetzbare Polyurethane oder ungesättigte Polyesterharze.

Vorzugsweise wird der Thermoplast oder Duroplast in Form eines Compounds eingesetzt.

Besonders bevorzugt wird der in Verfahrensschritt j) aufzutragende Kunststoffauftrag aus einem thermoplastischen Kunststoff mit wenigstens einem Füll- oder Verstärkungsstoff hergestellt. Bevorzugt wird wenigstens ein Füll- oder Verstärkungsstoff aus der Gruppe Kohlenstofffasern [CAS Nr. 7440-44-0], Glaskugeln, Voll- oder Hohlglaskugeln, Glasfasern, gemahlenes Glas, jeweils vorzugsweise aus Aluminium-Borsilikatglas mit einem Alkaligehalt 1% (E-Glas) [CAS-Nr. 65997-17-3], amorphe Kieselsäure [CAS Nr. 7631-86-9], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0] und Montmorillonit [CAS Nr. 67479-91-8] eingesetzt. Besonders bevorzugt werden Glasfasern eingesetzt.

Insbesondere bevorzugt werden auf 100 Massenanteile des thermoplastischen Kunststoffs Füll- oder Verstärkungsstoffe in Mengen im Bereich von 0,1 bis 150 Massenanteilen eingesetzt. Insbesondere ganz besonders bevorzugt werden auf 100 Massenanteile des thermoplastischen Kunststoffs Füll- oder Verstärkungsstoffe in Mengen im Bereich von 15 bis 150 Massenanteilen eingesetzt.

Insbesondere bevorzugt wird im Verfahrensschritt j) ein Kunststoffauftrag aus glasfaserverstärktem Polyamid 6 mit 15 bis 150 Massenanteilen Glasfasern auf 100 Massenanteile Polyamid im Spritzgießverfahren eingesetzt. Derartige Compounds sind erhältlich unter der Bezeichnung Durethan® bei der Lanxess Deutschland GmbH, Köln.

Auch ein in Verfahrensschritt j) aufzutragender duroplastischer Kunststoff enthält vorzugsweise wenigstens einen der oben genannten Füll- oder Verstärkungsstoffe. Bevorzugt enthält der duroplastische Kunststoff als Füll- oder Verstärkungsstoff Glasfasern oder Kohlefasern. Insbesondere bevorzugt werden auf 100 Massenanteile des duroplastischen Kunststoffs 10 bis 150 Massenanteile Glasfasern oder Kohlefasern als Füll- oder Verstärkungsstoff eingesetzt.

**Verfahrensschritt k)**

Im Verfahrensschritt k) erfolgt das Abkühlen des Kunststoffauftrags bzw. der Kunststoffüberspritzung, auch als Solidifikation bezeichnet. Der Begriff der Solidifikation beschreibt das Erstarren des in Verfahrensschritt j) aufgetragenen schmelzflüssigen Kunststoffs durch Abkühlen bzw. durch chemische Vernetzung zu einem Festkörper. Im Falle einer gleichzeitigen Formgebung können auf diese Weise direkt Funktionselemente, Strukturen und Flächen auf das Hohlprofil aufgebracht werden.

In einer Ausführungsform der vorliegenden Erfindung und im Falle einer weiter oben beschriebenen Oberflächenbehandlung entsteht nach dem Erstarren der Kunststoffschmelze auf der äußeren Oberfläche des Hohlprofils, vorzugsweise einem Metallrohr, ein Kunststoffauftrag in Form eines geschlossenen Kunststoffrings mit einer strukturierten Innenfläche, die exakt das positive Abbild der Oberflächenstruktur der Außenwandung des Hohlprofils, vorzugsweise des Metallrohrs, darstellt.

Eine erfindungsgemäße schubsteife, schubfeste, hochbelastbare und formschlüssige Verbindung rund um die äußere Wandung des Hohlprofils, vorzugsweise um die äußere Wandung des Hohlprofils in Form eines Metallrohrs, ist entstanden.

Weitere Details zum Verfahrensschritt k) wurden bereits oben im Abschnitt **"Nachdrücken und Abkühlen"** beschrieben.

**Verfahrensschritt l)**

Im Verfahrensschritt l) wird das fertige Verbundteil aus dem Spritzgieß- bzw. Presswerkzeug entnommen, nachdem mit Erstarren der Kunststoffschmelze der Druck im Kunststoffauftrag nicht mehr vorhanden ist und die Press- bzw. Schließkraft mit dem Öffnen des Werkzeugs abgebaut wurde. Weitere Details wurden bereits oben im Abschnitt "**Entformen"** beschrieben.

**Verfahrensschritt m)**

Schließlich erfolgt im Verfahrensschritt m) das Entleeren des Fluids aus dem Hohlprofil. Hierzu finden die bereits im Verfahrensschritt c) beschriebenen Schnellkupplungen mit automatischen Ventilen, die eine schnelle und leckagefreie Befüllung und Entleerung, sowie ein Entlüften von inkompressiblen hydraulischen Flüssigkeiten zulassen, vorzugweise Verwendung. Alternativ findet das Entleeren des Fluids im Spritzgieß- bzw. Presswerkzeug vor Verfahrensschritt l) statt. Auch hierbei sind vorzugsweise Vorrichtungen mit automatischen Ventilen einzusetzen, die eine schnelle und leckagefreie Entleerung des Fluids zulassen.

Abschließend findet das Entfernen der wenigstens zwei Verschlusselemente in umgekehrter Reihenfolge wie das Einbringen in Verfahrensschritt d) mittels automatischer Vorrichtung außerhalb des Spritzgieß- bzw. Presswerkzeugs statt.

Alternativ erfolgt das Entfernen der wenigstens zwei Verschlusselemente innerhalb des Spritzgieß- bzw. Presswerkzeugs durch Zurückziehen der in Verfahrensschritt d) beschriebenen (Werkzeug)Schieber oder Kernzüge.

In einer alternativen oder bevorzugten Ausführungsform erfolgt im Verfahrensschritt m) zunächst das Entleeren des Fluids aus dem Hohlprofil und anschließend das Entfernen der Verschlusselemente. Diese Verfahrensvariante ist jedoch nur mit Verschlusselementen möglich, die über wenigstens eine Vorrichtung zum Befüllen/ Entleeren, wie unter Verfahrensschritt c) beschrieben, verfügen.

**Kunststoff-Metall Verbundbauteil**

Erfindungsgemäß herzustellende Kunststoff-Metall Verbundbauteile werden in entsprechender Gestaltung vorzugsweise für den Kraftfahrzeugbau, insbesondere im Automobilbau eingesetzt. Bevorzugt handelt es sich dabei um Karosserieteile, insbesondere um ein sogenanntes Cross Car Beam (CCB), auch als Instrumententafelquerträger bezeichnet. Bekannt sind Instrumententafelquerträger beispielsweise aus US 5 934 744 A oder US 8 534 739 B**.**

Ebenfalls bevorzugt handelt es sich beim Kunststoff-Metall Verbundbauteil um ein Kraftfahrzeug Karosserieteil, insbesondere um ein Frontend Modul Carrier, auch als "Grill Opening Reinforcement" oder als "Bolster" bezeichnet. Bekannt sind Frontend Modul Carrier beispielsweise aus EP 0 519 776 A1**.**

Im erfindungsgemäßen Kunststoff-Metall Verbundbauteil, auch aufgrund der zwei Komponenten als Hybridbauteil bezeichnet, versteifen und verstärken sich das Hohlprofil und der im Verfahrensschritt j) mittels einer Kunststoffschmelze aufgetragene Kunststoffauftrag gegenseitig. Ferner dient der im Verfahrensschritt j) auf die äußere Wandung des Hohlprofils aufgetragene Kunststoffauftrag darüber hinaus zur Funktionsintegration im Sinne einer System- bzw. Modulbildung zur Anbindung von Kunststoffstrukturen oder Kunststoffflächen.

Bevorzugte Ausführungsformen eines erfindungsgemäß herzustellenden Kunststoff-Metall Verbundbauteils können Sicken oder ähnliche Verformungen und/oder vorzugsweise nachträglich hinzuzufügende Bohrungen oder ähnliche Öffnungen im Hohlprofil aufweisen.

Die vorliegende Erfindung wird anhand der **Fig. 1** bis **Fig. 6** erläutert:

**Fig. 1** zeigt ein erfindungsgemäß herzustellendes Kunststoff-Metall Verbundbauteil nach dem Spritzgieß- bzw. Pressverfahren, worin **1** für das Hohlprofil, hier in der Ausführungsform eines Rohres mit ellipsenförmigem Querschnitt, und **2** für ein mit dem Hohlprofil formschlüssig oder adhäsiv verbundenen Kunststoffauftrag steht. **3** zeigt die Längsachse des Hohlprofils. **4** zeigt die Kontaktflächen zur Abdichtung, die sich neben dem Kunststoffauftrag **2** auf dem Hohlprofil, im Bereich 1,0 - 10,0mm, in Richtung der Längsachse **3** gesehen, befinden.

**Fig. 2** zeigt den Querschnitt eines erfindungsgemäß einzusetzenden Spritzgieß- bzw. Presswerkzeugs **5** in geschlossenem Zustand mit der Öffnungs- und Schließrichtung **6** im Bereich der Kontaktflächen zur Abdichtung **4** die sich neben dem Kunststoffauftrag **2** auf dem Hohlprofil, im Bereich 1,0 - 10,0mm, in Richtung der Längsachse des Hohlprofils **3** gesehen, befinden. **7** zeigt das Werkzeugmaß A der Werkzeugkavität in Schließrichtung gesehen. **8** zeigt das Werkzeugmaß B der Werkzeugkavität rechtwinklig zur Schließrichtung gesehen und **9** das Kavitätsumfangsmaß UW der Spritzgieß bzw. Presswerkzeugkavität im Bereich von Werkzeugmaß A und B.

**Fig. 3** zeigt den Querschnitt eines Spritzgieß- bzw. Presswerkzeugs **5** in geöffnetem Zustand mit eingelegtem Hohlprofil **1** im Bereich der Kontaktflächen zur Abdichtung **4,** die sich neben dem Kunststoffauftrag **2** auf dem Hohlprofil **1,** im Bereich 1.0 - 10,0mm in Richtung der Längsachse des Hohlprofils **3** (siehe **Fig. 1**) gesehen befinden. **10** zeigt das Außenmaß C des Hohlprofils **1** in Schließrichtung gesehen. **11** zeigt das Außenmaß D des Hohlprofils **1** und **12** zeigt das Hohlprofilumfangsmaß UH des Hohlprofils **1** im Bereich des Hohlprofilmaß C und D. **17** zeigt das Spiel zwischen Hohlprofil und Werkzeugkavität.

**Fig. 4** zeigt den Querschnitt eines erfindungsgemäß einzusetzenden Spritzgieß- bzw. Presswerkzeugs **5** in geschlossenem Zustand mit eingelegtem Hohlprofil **1** im Bereich der Kontaktflächen zur Abdichtung **4,** die sich neben dem Kunststoffauftrag **2** auf dem Hohlprofil **1,** im Bereich 1,0 - 10,0mm in Richtung der Längsachse **3** (siehe **Fig. 1**) gesehen, befindet. **13** steht für das Außenmaß C des verspressten Hohlprofils **1** im Bereich der Kontaktflächen zur Abdichtung **4,** die sich neben dem Kunststoffauftrag **2** auf dem Hohlprofil **1,** im Bereich 1,0 - 10,0mm in Richtung von dessen Längsachse **3** gesehen, befinden. Nach dem Verpressen in Verfahrensschritt h) ist das Außenmaß C gleich dem Werkzeugmaß A. **14** steht für das Außenmaß D des verspressten Hohlprofils **1** im Bereich der Kontaktflächen zur Abdichtung **4,** die sich neben dem Kunststoffauftrag **2** auf dem Hohlprofil **1,** im Bereich 1,0 - 10,0mm in Richtung von dessen Längsachse **3** gesehen, befindet. Nach dem Verpressen in Verfahrensschritt h) ist das Außenmaß B gleich dem Werkzeugmaß D. **15** steht für das Hohlprofilumfangsmaß UH des verspressten Hohlprofils **1** im Bereich der Kontaktflächen zur Abdichtung.

**Fig. 5** zeigt ein erfindungsgemäß bereitzustellendes Hohlprofil **1,** mit erfindungsgemäß bereitzustellenden Verschlusselementen, hier als Verschlussstopfen **18** dargestellt, mit Hohlprofilinnenfläche **19** und den kongruenten Dichtflächen **20** und der wenigstens einen O -Ring Dichtung **21** und den unter Verfahrensschritt c) beschrieben Öffnungen **22** zum Befüllen, Entleeren und Entlüften des Hohlprofilinnenraums mit einem Fluid.

**Fig. 6** zeigt den Querschnitt eines geöffneten Spritzgieß- bzw. Presswerkzeugs **5** in geöffnetem Zustand mit eingelegtem Hohlprofil **1,** mit der Hohlprofilinnenfläche **19** im Längsschnitt mittig der Kavität für die Aufnahme des Hohlprofils **1,** dargestellt mit den in Verfahrensschritt a) beschriebenen Schiebern bzw. Kernzügen **23** und den Öffnungen **22** zum Befüllen, Entleeren und Entlüften des Hohlprofilinnenraums mit einem Fluid, und den Kontaktflächen **4** zur Abdichtung des Kunststoffauftrags seitlich der Kavität **24** in der der Kunststoffauftrag erfolgt.

## Patentansprüche

**1.** Verfahren zur Herstellung eines Kunststoff-Metall Verbundbauteils, insbesondere mit schubfester und formschlüssiger Verbindung der Metallkomponente und der Kunststoffkomponente, **gekennzeichnet durch**

a) Bereitstellen eines Spritzgieß- bzw. Presswerkzeugs mit wenigstens einer zu öffnenden Kavität und einem Werkzeugmaß A in Schließrichtung und einem Werkzeugmaß B rechtwinklig zur Schließrichtung des Werkzeugs und einem Kavitätsumfangsmaß UW, das dem Umfang der Kavität im Bereich der Werkzeugmaße A und B entspricht, mit wenigstens zwei Schiebern oder wenigstens zwei Kernzügen, in der Art angeordnet, dass die beiden offenen Enden des Hohlprofils durch die Fahrbewegung der wenigstens zwei Schieber oder wenigstens zwei Kernzüge verschlossen werden, oder die in Verfahrensschritt c) bereitzustellenden und in Verfahrensschritt d) in die offenen Enden einzubringenden Verschlusselemente gegen ein Herauspressen aus den offenen Enden des Hohlprofils durch den in Verfahrensschritt j) aufzutragenden Kunststoff blockiert werden,
b) Bereitstellen wenigstens eines Hohlprofils aus Metall mit einem Verhältnis von Durchmesser zu Wanddicke im Bereich von 5:1 bis 300:1, dessen Außenmaß C um einen Bereich von 0,1 bis 5% größer ist als das Werkzeugmaß A, und dessen Außenmaß D um einen Bereich von 0,1 bis 5% kleiner ist als das Werkzeugmaß B und die Angaben zu C und D sich auf 90° in Richtung zur Längsachse des Hohlprofils gesehen beziehen und dessen Hohlprofilumfangsmaß UH dem in a) genannten Kavitätsumfangsmaß UW der wenigstens einen Spritzgießwerkzeug- bzw. Presswerkzeugkavität entspricht,
c) Bereitstellen von wenigstens zwei Verschlusselementen,
d) Einbringen der in c) bereitgestellten Verschlusselemente und damit Abdichten der beiden offenen Enden des Hohlprofils,
e) Einbringen eines Fluids durch Öffnungen in das nach d) abgedichtete wenigstens eine Hohlprofil durch wenigstens eines der Verschlusselemente und Entlüften des Innenraums des Hohlprofils,
f) Einlegen des nach e) abgedichteten Hohlprofils in die wenigstens eine Kavität des in a) bereitgestellten Spritzgieß- bzw. Presswerkzeugs,
g) Abstützen der wenigstens zwei, die beiden Enden des Hohlprofils verschließenden Verschlusselemente durch die werkzeugseitigen Schieber oder Kernzüge,
h) Schließen der wenigstens einen Kavität des Spritzgieß- bzw. Presswerkzeugs sowie Verpressen des Hohlprofils mit der Werkzeugschließbewegung in Schließrichtung der wenigstens einen Kavität unter Formänderung des Hohlprofils indem die Außenfläche des Hohlprofils nach Beendigung des Werkzeugschließvorgangs der Innenform der Kavität des in Verfahrensschritt a) bereitgestellten Spritzgieß- bzw. Presswerkzeugs im Bereich der Kontaktflächen an den axialen Enden der wenigstens einen Kavität entspricht, wobei das Hohlprofilumfangsmaß UH gleich dem Kavitätsumfangsmaß UW bleibt,
i) Verriegeln der Schieber oder Kernzüge und damit gleichzeitiges Blockieren der in Verfahrensschritt c) bereitgestellten wenigstens zwei Verschlusselemente gegen ein Herauspressen durch den in Verfahrensschritt j) aufzutragenden Kunststoff aus den offenen Enden des Hohlprofils,
j) äußeres Auftragen eines Kunststoffauftrags in Form einer Schmelze bei einem Druck im Bereich von 1 bar bis 1000 bar auf das Hohlprofil, bevorzugt im Bereich von 10 bar bis 500bar, besonders bevorzugt im Bereich von 50 bar bis 300 bar,
k) Abkühlen des auf das Hohlprofil in i) aufgebrachten Kunststoffauftrags,
l) Entnehmen des fertigen Verbundbauteils aus dem Spritzgieß- bzw. Presswerkzeug, und
m) Entfernen der Verschlusselemente und Entleeren des Fluids aus dem mit Kunststoffauftrag versehenen Hohlprofil.

**2.** Verfahren gemäß Anspruch 1, **dadurch gekennzeichnet, dass** eine formschlüssige Verbindung von Hohlprofil und Kunststoffauftrag radial in alle Richtungen um die Mittelachse des Hohlprofils herum und rotatorisch rechtwinklig zur Mittelachse des Hohlprofils erzielt wird.

**3.** Verfahren gemäß Anspruch 1 oder 2, **dadurch gekennzeichnet, dass** zusätzlich die Verbindung von Hohlprofil und Kunststoffauftrag mit der Blockierung aller Freiheitsgrade, translatorisch in X-, Y- und Z-Richtung und rotatorisch um die X-, Y- und Z-Achse mittels einer Oberflächenbehandlung der äußeren Wandung des Hohlprofils erzielt wird.

**4.** Verfahren gemäß Anspruch 3, **dadurch gekennzeichnet, dass** als Oberflächenbehandlung wenigstens eine der Formen Auftrag wenigstens eines Haftvermittlers, Plasma-Oberflächenaktivierung, Laserstrukturierung, chemische Vorbehandlung und additives Auftrageverfahren ausgewählt wird.

**5.** Verfahren gemäß Anspruch 4, **dadurch gekennzeichnet, dass** als chemische Vorbehandlungsmittel der Einsatz von Säuren oder Basen und als additives Auftragsverfahren das thermische Metallaufspritzverfahren durchgeführt werden.

**6.** Verfahren gemäß einem der Ansprüche 1 bis 5, **dadurch gekennzeichnet, dass** das Befüllen der Hohlprofils mit dem Fluid und/oder das Entleeren des Fluids aus dem Hohlprofil vor dem Verfahrensschritt I) im Spritzgieß- bzw. Presswerkzeug erfolgt.

**7.** Verfahren gemäß einem der Ansprüche 1 bis 6, **dadurch gekennzeichnet, dass** die Verfahrensschritte d) und e) innerhalb des Spritzgieß- bzw. Presswerkzeugs durchgeführt werden, wobei die Verschlusselemente Bestandteil des Spritzgieß- bzw. Presswerkzeugs in Form von Schiebern oder Kernzügen sind, die in diesem Fall das in Verfahrensschritt f) noch beidseitig offenen Hohlprofil abdichten.

**8.** Verfahren gemäß einem der Ansprüche 1 bis 7, **dadurch gekennzeichnet, dass** in Verfahrensschritt e) das Einbringen eines Fluids erfolgt, bis dass 100% des Volumens des Innenraums des Hohlprofils mit demselben gefüllt sind.

**9.** Verfahren gemäß einem der Ansprüche 1 bis 8, **dadurch gekennzeichnet, dass** das Hohlprofil, abgesehen von den durch Verschlusselemente zu verschließenden Öffnungen an den Kopfenden, keine weiteren Öffnungen in Form von Bohrungen oder Löchern aufweist.

**10.** Verfahren gemäß einem der Ansprüche 1 bis 9, **dadurch gekennzeichnet, dass** nach dem Verfahrensschritt I) das Hohlprofil an wenigstens einer Position durch das Einwirken zusätzlicher Biegekräfte verformt wird.

**11.** Verfahren gemäß einem der Ansprüche 1 bis 10, **dadurch gekennzeichnet, dass** vor dem Verfahrensschritt f) oder während eines der Verfahrensschritte f), g) oder h) das Hohlprofil an wenigstens einer Position durch das Einwirken zusätzlicher Biegekräfte verformt wird.

**12.** Verfahren gemäß Anspruch 11, **dadurch gekennzeichnet, dass** diese Verformung außerhalb des Werkzeugs an jeder beliebigen Position des Hohlprofils erfolgt.

**13.** Verfahren gemäß einem der Ansprüche 1 bis 12, **dadurch gekennzeichnet, dass** das in Verfahrensschritt b) bereitzustellende Hohlprofil auf seiner Außenseite Strukturelemente, vorzugsweise Rippen, aufweist.

**14.** Verfahren gemäß einem der Ansprüche 1 bis 13, **dadurch gekennzeichnet, dass** es sich bei dem Fluid um ein inkompressibles, hydraulisches Fluid handelt.

**15.** Verfahren gemäß Anspruch 14, **dadurch gekennzeichnet, dass** als Fluid Öl-in-Wasser-Emulsionen bzw. Lösungsprodukte mit einem Wassergehalt von mehr als 80 % oder Konzentrate auf Mineralölbasis oder auf Basis von löslichen Polyglykolen, Wasser-in-Öl-Emulsionen mit einem Wassergehalt von mehr als 40 %, oder Mineralöl, oder Wasserglykole mit einem Wassergehalt über 35 % oder Polyglykol-Lösung, oder wasserfreie synthetische Flüssigkeiten mit einer höheren Dichte als Mineralöl oder Wasser eingesetzt werden.

Fig.1

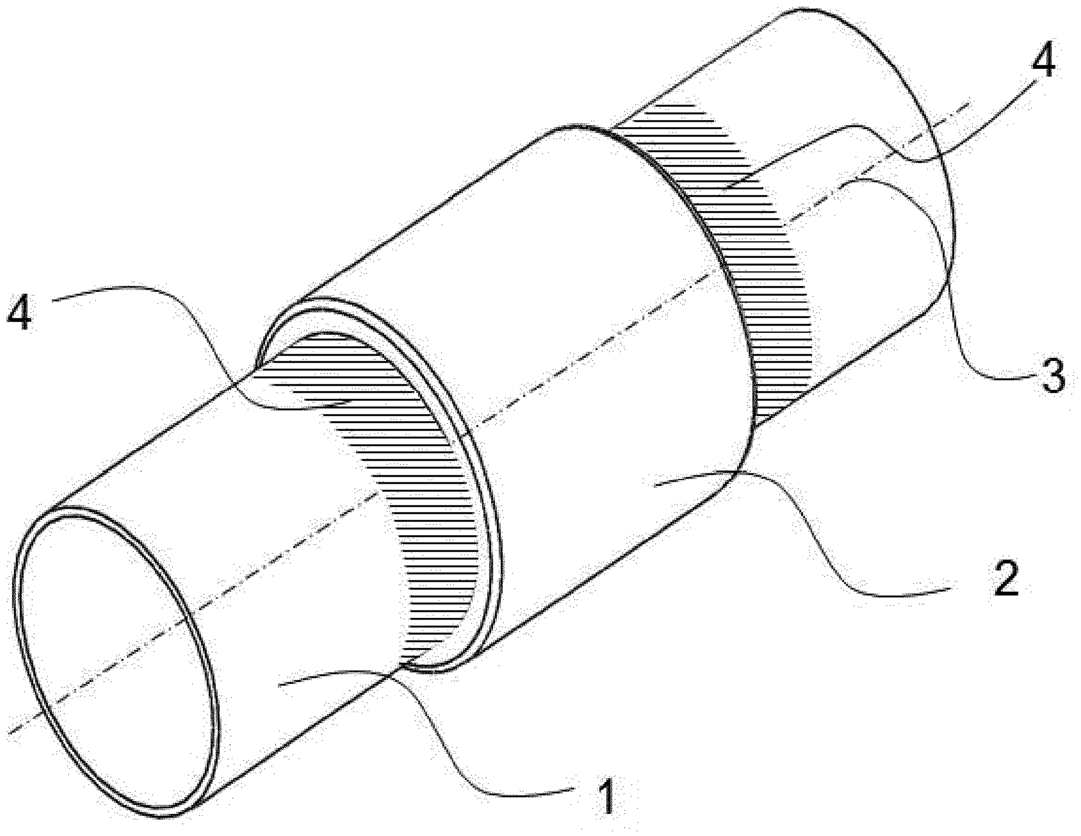


Fig.2

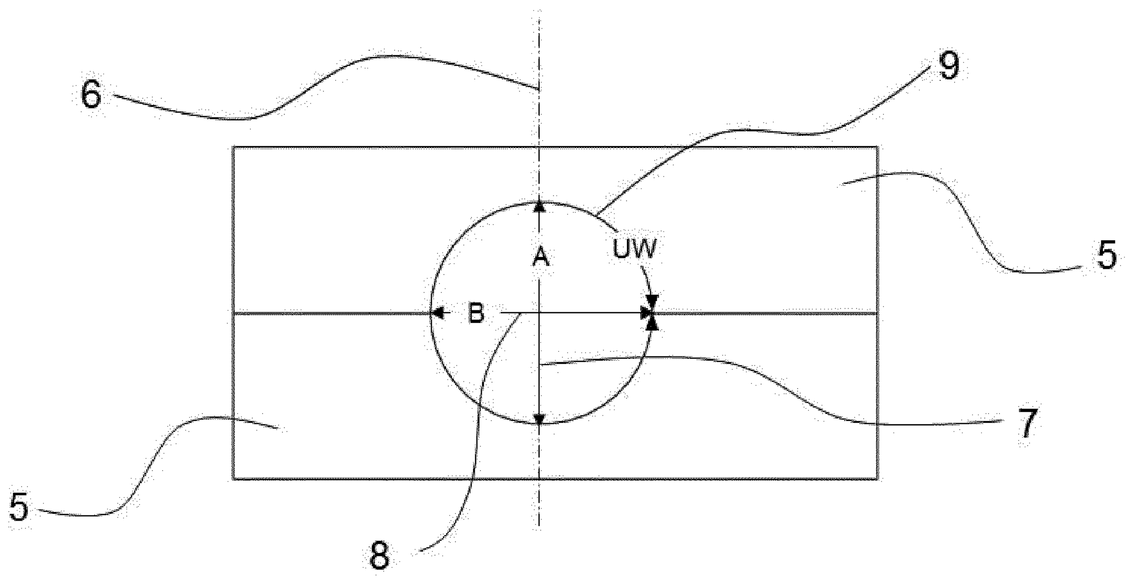

Fig. 3

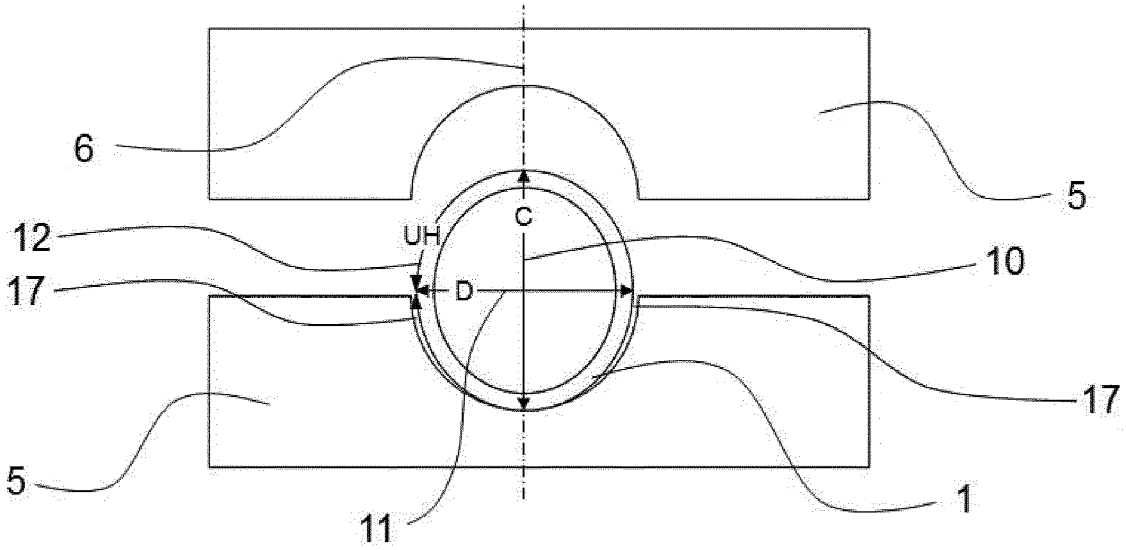


Fig. 4

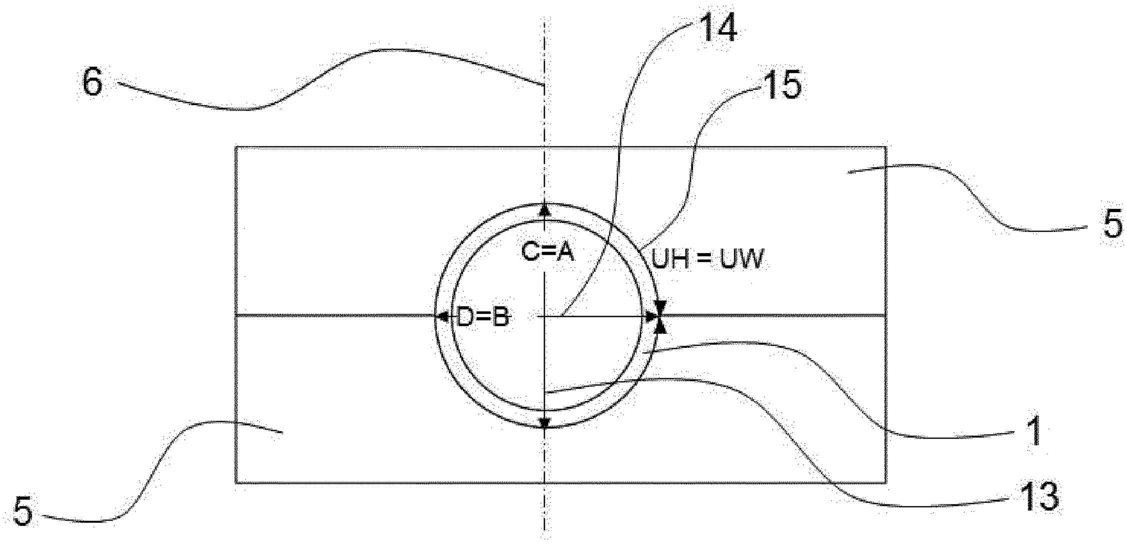

Fig. 5

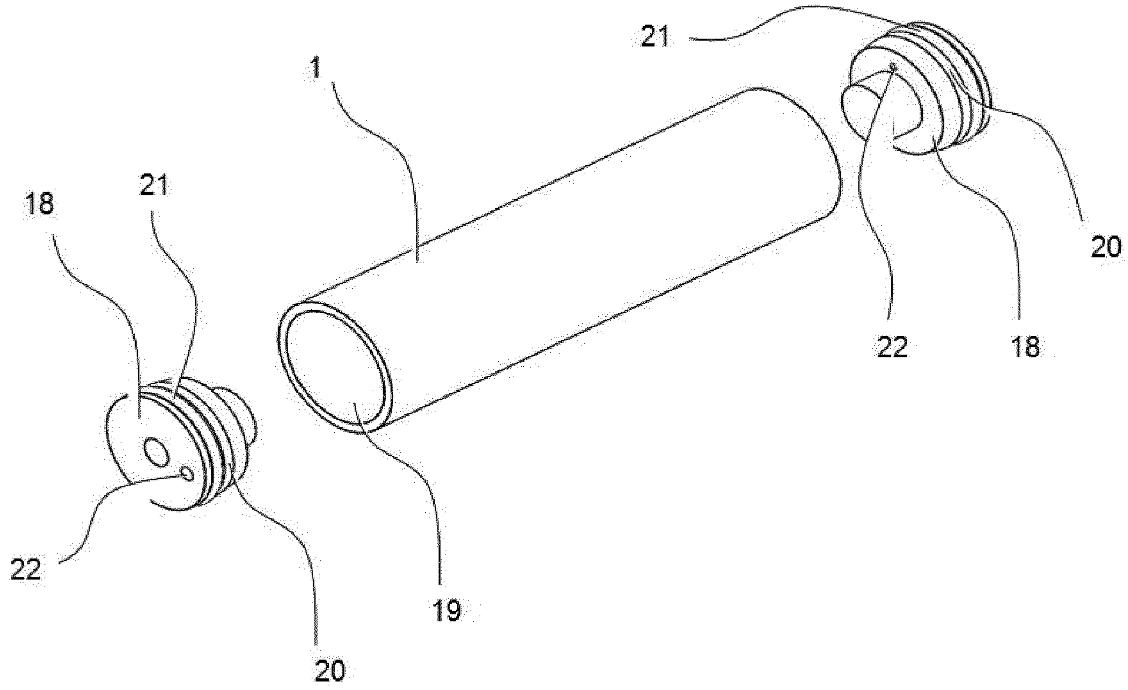


Fig. 6

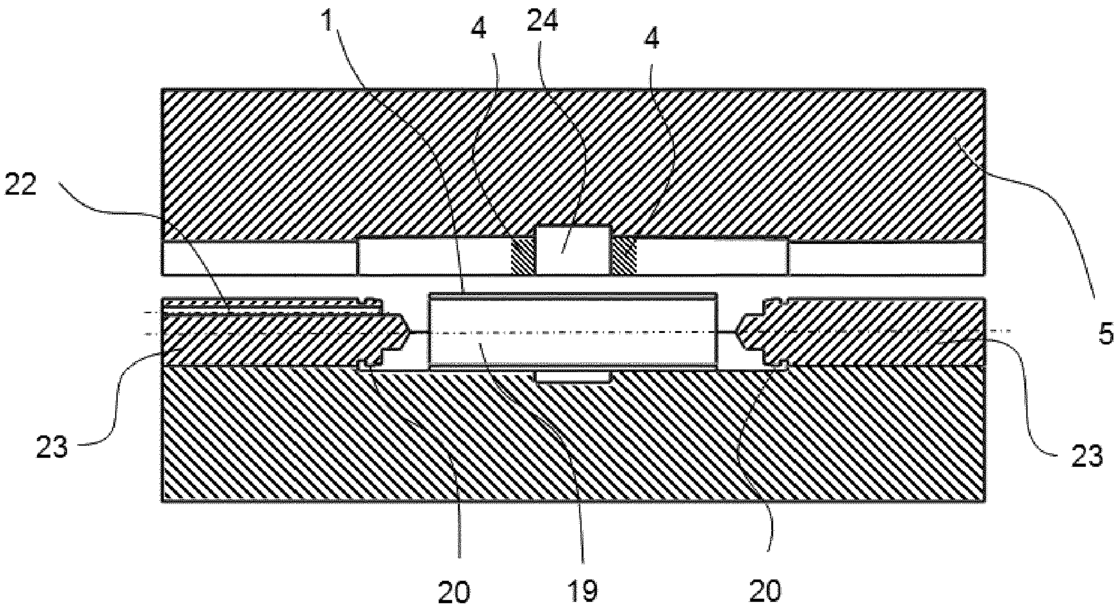

Europäisches Patentamt
European Patent Office
Office européen des brevets

# EUROPÄISCHER RECHERCHENBERICHT

Nummer der Anmeldung
EP 19 15 5792

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | WO 2005/002825 A1 (BAYER AG [DE]; KLOCKE MARTIN [DE]) 13. Januar 2005 (2005-01-13)<br>* Fig.2, Bezugszeichen 3,3' Siehe ESOP *<br>----- | 1-15 | INV.<br>B29C45/14<br><br>ADD.<br>B29L23/00<br>B29K705/00 |
| A | EP 2 604 407 A1 (REHAU SA [FR])<br>19. Juni 2013 (2013-06-19)<br>* Versch. Form des Einslegeteils *<br>----- | 1-15 | |
| | | | RECHERCHIERTE SACHGEBIETE (IPC) |
| | | | B29C<br>B29L<br>B29K |

1

Der vorliegende Recherchenbericht wurde für alle Patentansprüche erstellt

| Recherchenort | Abschlußdatum der Recherche | Prüfer |
|---|---|---|
| München | 14. Mai 2019 | Tonelli, Enrico |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 19 15 5792

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2019

| Im Recherchenbericht angeführtes Patentdokument | Datum der Veröffentlichung | Mitglied(er) der Patentfamilie | Datum der Veröffentlichung |
|---|---|---|---|
| WO 2005002825 A1 | 13-01-2005 | CN 1878648 A | 13-12-2006 |
| | | DE 10329710 A1 | 10-02-2005 |
| | | EP 1644175 A1 | 12-04-2006 |
| | | KR 20060025199 A | 20-03-2006 |
| | | US 2005001354 A1 | 06-01-2005 |
| | | WO 2005002825 A1 | 13-01-2005 |
| EP 2604407 A1 | 19-06-2013 | EP 2604407 A1 | 19-06-2013 |
| | | FR 2984207 A1 | 21-06-2013 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009077026 A1
- WO 2005002825 A1
- EP 2604407 A1
- DE 202008003682 U1
- DE 4330860 A
- EP 1386721 A1
- US 5934744 A
- US 8534739 B
- EP 0519776 A1


### In der Beschreibung aufgeführte Nicht-Patentliteratur


- **W. MICHAELI ; G. MENGES ; P. MOHREN.** Anleitung zum Bau von Spritzgießwerkzeugen, 5. völlig überarbeitete Auflage. Carl Hanser Verlag München Wien, 1999
- **W.HARTMANN ; CO.** *GmbH & Co.KG,* 2018, produktinfos/ff2/index_ger.html
- **D. ALTENPOHL.** Aluminium und Aluminiumlegierungen. Springer Verlag Berlin Heidelberg, 1965
- Euro-Mold Special. Technischer Fachverlag Möller e.K, 2010, 1.12-4.12
- Handbuch Spritzgießen. Carl Hanser Verlag, 2001, 1022-1024
- *CHEMICAL ABSTRACTS,* 7440-44-0
- *CHEMICAL ABSTRACTS,* 65997-17-3
- *CHEMICAL ABSTRACTS,* 7631-86-9
- *CHEMICAL ABSTRACTS,* 1344-95-2
- *CHEMICAL ABSTRACTS,* 10101-39-0
- *CHEMICAL ABSTRACTS,* 546-93-0
- *CHEMICAL ABSTRACTS,* 1332-58-7
- *CHEMICAL ABSTRACTS,* 92704-41-1
- *CHEMICAL ABSTRACTS,* 1317-65-3
- *CHEMICAL ABSTRACTS,* 1302-76-7
- *CHEMICAL ABSTRACTS,* 14808-60-7
- *CHEMICAL ABSTRACTS,* 1318-94-1
- *CHEMICAL ABSTRACTS,* 12251-00-2
- *CHEMICAL ABSTRACTS,* 7727-43-7
- *CHEMICAL ABSTRACTS,* 68476-25-5
- *CHEMICAL ABSTRACTS,* 13983-17-0
- *CHEMICAL ABSTRACTS,* 67479-91-8